# FASCICULE DE BREVET EUROPEEN

(11) **EP 1 410 327 B1**
(45) Date de publication et mention de la délivrance du brevet: **16.11.2005**
(21) Numéro de dépôt: 02747506.0
(22) Date de dépôt: 05.06.2002
(51) Int. Cl.: G06T 1/00

(54) **PROCEDE ET SYSTEME POUR PRODUIRE DES INFORMATIONS FORMATEES LIEES AUX DEFAUTS D'AU MOINS UN APPAREIL D'UNE CHAINE, NOTAMMENT AU FLOU**
VERFAHREN UND VORRICHTUNG ZUR ERZEUGUNG FORMATIERTER INFORMATION, DIE MIT DEN FEHLERN ZUMINDEST EINES GERÄTS EINER KETTE VERBUNDEN IST, INSBESONDERE DER BILDSCHÄRFEVERZERRUNG
METHOD AND SYSTEM FOR PRODUCING FORMATTED DATA RELATED TO DEFECTS OF AT LEAST AN APPLIANCE OF A SET, IN PARTICULAR, RELATED TO BLURRING

(30) Priorité: 12.07.2001 FR 0109291; 12.07.2001 FR 0109292
(43) Date de publication de la demande: 21.04.2004
(73) Titulaire: DO Labs, 92100 Boulogne Billancourt (FR)
(72) Inventeur: CHANAS, Laurent, F-78800 Houilles (FR); GUICHARD, Frédéric, F-75012 Paris (FR); MOISAN, Lionel, F-75014 Paris (FR); LIEGE, Bruno, F-75015 Paris (FR)
(74) Mandataire: Grynwald, Albert
(86) Numéro de dépôt international: PCT/FR2002/001915
(87) Numéro de publication internationale: WO 2003/007242

(56) Documents cités:
- EP-A- 0 867 690
- EP-A- 1 104 175
- WO-A-01/35052
- US-A- 5 251 271
- US-A- 5 353 392
- WATANABE M ET AL: "AN IMAGE DATA FILE FORMAT FOR DIGITAL STILL CAMERA" FINAL PROGRAM AND ADVANCE PRINTING OF PAPERS. ANNUAL CONFERENCE. IMAGING ON THE INFORMATION SUPERHIGHWAY, XX, XX, 1995, pages 421-424, XP000618775
- NISO: "NISO draft standard. Data dictionary -technical metadata for digital still images- working draft, 1.0" NO NAME, [en ligne] 5 juillet 2000 (2000-07-05), pages 1-40, XP002224028 Extrait de l'Internet: <URL:www.niso.org/pdfs/DataDict.pdf> [extrait le 2002-12-06]
- PATENT ABSTRACTS OF JAPAN vol. 2000, no. 08, 6 octobre 2000 (2000-10-06) & JP 2000 137806 A (CANON INC), 16 mai 2000 (2000-05-16)
- JAPAN ELECTRONIC INDUSTRY DEVELOPMENT ASSOCIATION: "Digital Still Camera Image File Format Standard (Exchangeable image file format for digital still cameras : EXIF) Version 2.1" NO NAME, [en ligne] 12 juillet 1998 (1998-07-12), pages 1-1-166, XP002224029 japan Extrait de l'Internet: <URL:www.pima.net/standards/it10/pima15740 /exif_2-1.pdf> [extrait le 2002-12-06]

## Description

### Préambule de la description

### Domaine concerné, problème posé

La présente invention concerne un procédé et un système pour produire des informations formatées liées aux défauts d'au moins un appareil d'une chaîne.

### Etat de la technique

Le document NISO: 'NISO draft standard. Data dictionary -technical metadata for digital still images- working draft, 1.0' NO NAME, [en ligne] 5 juillet 2000 (2000-07-05), pages 1-40, XP002224028, extrait de l'Internet: <URL:www.niso.org/pdfs/DataDict.pdf> [extrait le 2002-12-06] divulgue des informations formatées servant à estimer l'exactitude de la sortie d'un système de traitement d'images, et l'exactitude des techniques de préservation de l'image, particulièrement en cas de migration.

### Solution

### Procédé

L'invention est définie dans la revendication de procédé 1 et dans la revendication de système 18 ci-annexées. Elle concerne un procédé pour produire des informations formatées liées aux appareils d'une chaîne d'appareils. La chaîne d'appareils comprend notamment au moins un appareil de capture d'image et/ou au moins un appareil de restitution d'image. Le procédé comprend l'étape de produire des informations formatées liées aux défauts d'au moins un appareil de la chaîne.

De préférence, selon l'invention, l'appareil permet de capturer ou restituer une image (I). L'appareil comporte au moins une caractéristique fixe et/ou une caractéristique variable selon l'image (I). Les caractéristiques fixe et/où variables sont susceptibles d'être associées à une ou plusieurs valeurs de caractéristiques, notamment la focale et/ou la mise au point et leurs valeurs de caractéristiques associées. Le procédé comprend l'étape de produire des informations formatées mesurées liées aux défauts de l'appareil à partir d'un champ mesuré D(H). Les informations formatées peuvent comprendre les informations formatées mesurées.

### Informations formatées étendues et écart

De préférence, selon l'invention, le procédé comprend en outre l'étape de produire des informations formatées étendues liées aux défauts de l'appareil à partir des informations formatées mesurées. Les informations formatées peuvent comprendre les informations formatées étendues. Les informations formatées étendues présentent un écart par rapport auxdites informations formatées mesurées.

### Notion de modèle - Interpolation - Choix d'un seuil et choix du modèle le plus simple pour atteindre le seuil

De préférence, selon l'invention, le procédé est tel que les informations formatées, produites à partir des informations formatées mesurées, sont représentées par les paramètres d'un modèle paramétrable choisi parmi un ensemble de modèles paramétrables, notamment un ensemble de polynômes. Le procédé comprend en outre l'étape de sélectionner le modèle paramétrable dans l'ensemble de modèles paramétrables :
- en définissant un écart maximal,
- en ordonnant les modèles paramétrables de l'ensemble de modèles paramétrables selon leur degré de complexité de mise en oeuvre,
- en choisissant le premier des modèles paramétrables de l'ensemble de modèles paramétrables ordonné pour lequel l'écart est inférieur à l'écart maximal.

Selon une variante de réalisation l'invention, les informations formatées étendues peuvent être constituées par les informations formatées mesurées.

De préférence, selon l'invention, le procédé comprend un algorithme de calcul (AC) permettant d'obtenir le champ mesuré D(H) à partir d'un référentiel (M). L'algorithme de calcul (AC) comprend les étapes suivantes :
- l'étape de capturer ou de restituer le référentiel (M) au moyen de l'appareil pour produire une image (I),
- l'étape de choisir au moins une zone image (ZI) dans l'image (I),
- l'étape de calculer une image de référence (R) à partir de l'image (I),
- l'étape de déterminer, dans l'image référence (R), une zone de référence (ZR) homologue à la zone image (ZI),
- l'étape de choisir une base (B) permettant de représenter tout ou partie de la zone image (ZI) par une représentation image (RI) et de représenter tout ou partie de la zone de référence (ZR) par une représentation de référence (RR),
- l'étape de sélectionner zéro, une ou plusieurs caractéristiques variables parmi l'ensemble des caractéristiques variables, ci-après désignées les caractéristiques variables sélectionnées.

Le champ mesuré D(H) est composé de l'ensemble des triplets constitués :
- d'une zone image (ZI) et ou d'un identifiant de la zone image (ZI),
- de la représentation image (RI) de la zone image (ZI),
- de la représentation de référence (RR) de la zone de référence (ZR).

Le champ mesuré D(H) est en outre composé de la valeur, pour l'image (I), de chacune des caractéristiques variables sélectionnées. Il résulte de la combinaison des traits techniques qu'on obtient un champ mesuré caractérisant un défaut. Ce défaut est dénommé le flou, au sens de la présente invention.

De préférence, selon l'invention l'image de référence (R) comporte des pixels de référence. Les pixels de référence ont chacun une valeur de pixel de référence. Le procédé est tel que pour calculer l'image de référence (R) à partir de l'image (I), on sous-échantillonne l'image (I), notamment pour obtenir une image de référence (R) dont les pixels de référence peuvent prendre une ou l'autre de deux valeurs de pixels de référence.

Il résulte de la combinaison des traits techniques que l'image de référence (R) présente les mêmes défauts que l'image (I) I, à l'exclusion du flou.

De préférence, selon l'invention, le procédé est tel qu'on choisit une base (B) permettant une représentation en fréquence, notamment calculée à l'aide d'une transformée de Fourier.

De préférence, selon l'invention, le procédé est tel qu'on choisit une base (B) permettant une représentation en ondelettes ou en paquets d'ondelettes.

De préférence, selon l'invention, le procédé est tel qu'on choisit une base linéaire comprenant un petit nombre d'éléments. Il en résulte qu'avec un calcul simple on obtient une représentation avec une bonne approximation.

De préférence, selon l'invention, la représentation de référence (RR) est constituée de valeurs numériques. Le procédé comprend en outre l'étape de choisir le référentiel (M), tel que le pourcentage de valeurs numériques inférieures à un premier seuil déterminé soit inférieur à un second seuil prédéterminé, notamment 1%.

De préférence, selon l'invention, le référentiel (M) est composé d'éléments dont la répartition en taille et dont la position géométrique s'étendent sur un large spectre.

Selon l'invention, le référentiel (M) peut être choisi de telle sorte que la représentation de l'image (I) dans la base (B) est, aux défauts près, sensiblement indépendante des conditions de capture ou de restitution de l'image (I), notamment, dans le cas d'un appareil de capture d'image, la représentation est indépendante de l'orientation et de la position du référentiel (M) par rapport à l'appareil de capture d'image.

Selon l'invention, le référentiel (M) est construit à partir d'une image quantifiée d'une scène naturelle.

Selon l'invention, le procédé comprend en outre l'étape de pré-traiter l'image (I) au moyen d'un calcul éliminant une partie des défauts.

Le flou au sens de la présente invention caractérise l'appareil et les moyens de calcul permettant d'enlever les défauts.

### Interpolation pour formater à un point quelconque

De préférence, selon l'invention, le procédé comprend en outre l'étape d'obtenir les informations formatées étendues relatives à une zone image quelconque (ZIQ), en déduisant les informations formatées, relatives à une zone image quelconque (ZIQ), à partir des informations formatées mesurées.

### Focale Variable

De préférence, selon l'invention, le procédé est tel que l'appareil de la chaîne d'appareil présente au moins une caractéristique variable selon l'image, notamment la focale et/ou l'ouverture. Chaque caractéristique variable est susceptible d'être associée à une valeur pour former une combinaison constituée de l'ensemble des caractéristiques variables et des valeurs. Le procédé comprend en outre les étapes suivantes :
- l'étape de sélectionner des combinaisons prédéterminées,
- l'étape de calculer des informations formatées mesurées, notamment en mettant en oeuvre l'algorithme de calcul (AC) pour chacune des combinaisons prédéterminées ainsi sélectionnées.

### Focale Variable - Formatage à une zone quelconque

Selon l'invention, on appelle argument une zone image quelconque et une des combinaisons. Le procédé comprend en outre l'étape de déduire les informations formatées étendues relatives à un argument quelconque à partir des informations formatées mesurées.

Il résulte de la combinaison des traits techniques que les informations formatées sont plus compactes et robustes aux erreurs de mesure.

### Choix d'un seuil sur l'écart - Formatage selon ce seuil

De préférence, selon l'invention, le procédé est tel que pour déduire les informations formatées étendues à partir des informations formatées mesurées :
- on définit un premier seuil,
- on sélectionne les informations formatées étendues telles que le écart soit inférieur au premier seuil.

### Rajout des écarts aux informations formatées

De préférence, selon l'invention, le procédé comprend en outre l'étape d'associer les écarts aux informations formatées. Il résulte de la combinaison des traits techniques que les informations formatées peuvent être utilisées par des logiciels de traitement d'images capturées par l'appareil, pour obtenir des images dont les défauts résiduels sont connus. Il résulte de la combinaison des traits techniques que les informations formatées peuvent être utilisées par des logiciels de traitement d'images pour obtenir des images destinées à être restituées par l'appareil de restitution d'images avec des défauts résiduels connus.

### Cas de l'image couleur

De préférence, selon l'invention, dans le cas ou l'image est une image en couleur composée de plusieurs plans couleur, le procédé comprend en outre l'étape de produire les informations formatées mesurées en mettant en oeuvre l'algorithme de calcul (AC) pour au moins deux des plans couleur.

### Système

L'invention concerne un système pour produire des informations formatées liées aux appareils d'une chaîne d'appareils. La chaîne d'appareils comprend notamment au moins un appareil de capture d'image et/ou au moins un appareil de restitution d'image. Le système comprend des moyens de calcul pour produire des informations formatées liées aux défauts d'au moins un appareil de la chaîne.

De préférence, selon l'invention, l'appareil permet de capturer ou de restituer une image (I). L'appareil comporte au moins une caractéristique fixe et/ou une caractéristique variable selon l'image (I). La caractéristique fixe et/ou la caractéristique variable sont susceptibles d'être associée à une ou plusieurs valeurs de caractéristiques, notamment la focale et/ou la mise au point et leurs valeurs de caractéristiques associées. Le système comprend des moyens de calcul pour produire des informations formatées mesurées liées aux défauts de l'appareil, à partir d'un champ mesuré D(H). Les informations formatées peuvent comprendre les informations formatées mesurées.

### Informations formatées étendues et écart

De préférence, selon l'invention, le système comprend en outre des moyens de calcul pour produire des informations formatées étendues liées aux défauts de l'appareil à partir des informations formatées mesurées. Les informations formatées peuvent comprendre les informations formatées étendues. Les informations formatées étendues présentent un écart par rapport auxdites informations formatées mesurées.

### Notion de modèle - Interpolation - Choix d'un seuil et choix du modèle le plus simple pour arriver au seuil

De préférence, selon l'invention, le système est tel que les informations formatées, produites à partir des informations formatées mesurées, sont représentées par les paramètres d'un modèle paramétrable choisi parmi un ensemble de modèles paramétrables, notamment un ensemble de polynômes. Le système comprend en outre des moyens de sélection pour sélectionner le modèle paramétrable dans l'ensemble de modèles paramétrables :
- en définissant un écart maximal,
- en ordonnant les modèles paramétrables de l'ensemble de modèles paramétrables selon leur degré de complexité de mise en oeuvre,
- en choisissant le premier des modèles paramétrables du ensemble de modèles paramétrables ordonné pour lequel le écart est inférieur au écart maximal.

De préférence, selon l'invention, le système comprend des moyens de calcul mettant en oeuvre un algorithme de calcul (AC) permettant d'obtenir le champ mesuré D(H) à partir d'un référentiel (M). L'appareil de capture d'image ou de restitution d'image comprend des moyens pour capturer ou restituer le référentiel (M) et pour produire ainsi une image (I). Les moyens de calcul comprennent des moyens de traitement informatique pour :
- choisir au moins une zone image (ZI) dans l'image (I) ,
- calculer une image de référence (R) à partir de l'image (I),
- déterminer, dans la image référence (R), une zone de référence (ZR) homologue à la zone image (ZI),
- choisir une base (B) permettant de représenter tout ou partie de la zone image (ZI) par une représentation image (RI) et de représenter tout ou partie de la zone de référence (ZR) par une représentation de référence (RR),
- sélectionner zéro, une ou plusieurs caractéristiques variables parmi l'ensemble des caractéristiques variables, ci-après désignées les caractéristiques variables sélectionnées.

Le champ mesuré D(H) est composé de l'ensemble des triplets constitués :
- d'une zone image (ZI) et/ou d'un identifiant de la zone image (ZI),
- de la représentation image (RI) de la zone image (ZI),
- de la représentation de référence (RR) de la zone de référence (ZR).

Le champ mesuré D(H) est en outre composé de la valeur, pour l'image (I), de chacune des caractéristiques variables sélectionnées. De sorte qu'on obtient un champ mesuré caractérisant un défaut dénommé flou au sens de la présente invention.

De préférence, selon l'invention, l'image de référence (R) comporte des pixels de référence. Les pixels de référence ayant chacun une valeur de pixel de référence. Le système est tel que les moyens de traitement pour calculer l'image de référence (R) à partir de l'image (I), comprennent des moyens pour sous-échantillonner l'image (I), notamment pour obtenir une image de référence (R) dont les pixels de référence peuvent prendre une ou l'autre de deux valeurs de pixels de référence.

De préférence, selon l'invention, le système est tel que les moyens de traitement informatique permettent le choix d'une base (B) permettant une représentation en fréquence, notamment calculée à l'aide d'une transformée de Fourier.

De préférence, selon l'invention, le système est tel que les moyens de traitement informatique permettent le choix d'une base (B) permettant une représentation en ondelettes ou en paquets d'ondelettes.

De préférence, selon l'invention, le système est tel que les moyens de traitement informatique permettent le choix d'une base linéaire comprenant un petit nombre d'éléments.

De préférence, selon l'invention, la représentation de référence (RR) est constituée de valeurs numériques. Le système comprend des moyens de traitement informatique permettant de choisir le référentiel (M) de telle sorte que le pourcentage de valeurs numériques inférieures à un premier seuil déterminé soit inférieur à un second seuil prédéterminé, notamment 1%.

De préférence, selon l'invention, le référentiel (M) est composé d'éléments dont la répartition en taille et dont la position géométrique s'étendent sur un large spectre.

De préférence, selon l'invention, le référentiel (M) est choisi de telle sorte que la représentation de l'image (I) dans la base (B) est, aux défauts près, sensiblement indépendante des conditions de capture ou de restitution de l'image (I), notamment, dans le cas d'un appareil de capture d'image, la représentation est indépendante de l'orientation et de la position du référentiel (M) par rapport au appareil de capture d'image.

De préférence, selon l'invention, le référentiel (M) est construit à partir d'une image quantifiée d'une scène naturelle.

De préférence, selon l'invention, le système permet en outre de pré-traiter la image (I) en mettant en oeuvre des moyens de calcul pour éliminer une partie des défauts.

### Interpolation pour formater à un point quelconque

De préférence, selon l'invention, le système comprend en outre des moyens de traitement informatique permettant d'obtenir les informations formatées étendues relatives à une zone image quelconque (ZIQ), en déduisant les informations formatées, relatives à une zone image quelconque (ZIQ), à partir des informations formatées mesurées.

### Focale Variable

De préférence, selon l'invention le système est tel que l'appareil de la chaîne d'appareil présente au moins une caractéristique variable selon l'image, notamment la focale et/ou l'ouverture. Chaque caractéristique variable est susceptible d'être associée à une valeur pour former une combinaison constituée de l'ensemble des caractéristiques variables et des valeurs. Le système comprend en outre des moyens de calcul pour calculer des informations formatées mesurées, notamment en mettant en oeuvre l'algorithme de calcul (AC) pour des combinaisons prédéterminées sélectionnées.

### Focale Variable - Formatage à une zone quelconque

De préférence, selon l'invention, le système comprend en outre des moyens de traitement informatique pour déduire les informations formatées étendues relatives à un argument quelconque à partir des informations formatées mesurées. On appelle argument une zone image quelconque et une des combinaisons.

### Choix d'un seuil sur l'écart - Formatage selon ce seuil

De préférence, selon l'invention, le système est tel que les moyens de traitement informatique pour déduire les informations formatées étendues à partir des informations formatées mesurées comprennent des moyens de sélection pour sélectionner les informations formatées étendues de telle sorte que l'écart soit inférieur à un premier seuil.

### Rajout des écarts aux informations formatées

De préférence, selon l'invention, le système comprend en outre des moyens de traitement informatique pour associer les écarts auxdites informations formatées.

### Cas de l'image couleur

De préférence, selon l'invention, l'image est une image en couleur composée de plusieurs plans couleur. Le système comprend en outre des moyens de calcul pour produire les informations formatées mesurées en mettant en oeuvre l'algorithme de calcul (AC) pour au moins deux des plans couleur.

### Description détaillée

D'autres caractéristiques et avantages de l'invention apparaîtront à la lecture de la description des variantes de réalisation de l'invention donnée à titre d'exemple indicatif et non limitatif, et de :
la figure 1 qui représente, un exemple de mise en oeuvre du procédé de l'invention,
la figure 2 qui représente un exemple de réalisation d'un champ mesuré D(H),
la figure 3a qui représente un exemple d'une ligne de luminance issue du référentiel M,
la figure 3b qui représente un exemple d'une ligne de luminance générée dans l'image I,
la figure 3c qui représente un exemple d'une ligne de luminance sur l'image de référence R,
la figure 4a qui représente un exemple de réalisation d'une représentation de référence RR,
la figure 4b qui représente un exemple de réalisation d'une représentation de référence RR adaptée au référentiel M,
la figure 4c qui représente un exemple de réalisation d'une représentation de référence RR non adaptée au référentiel M,
la figure 5a qui représente un exemple de découpe de l'image de référence R en zone de référence ZR,
la figure 5b qui représente un exemple d'informations formatées mesurées relatives à d'un appareil à caractéristiques variables,
la figure 5c qui représente un exemple du système de génération d'informations formatées,
la figure 6 : des informations formatées IF liées aux défauts P5 d'un appareil APP d'une chaîne d'appareils P3.

### Appareil

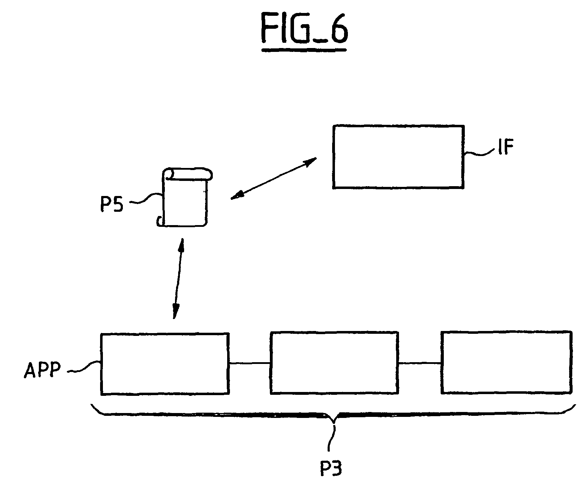

En se référant notamment à la figure 6, on va décrire la notion d'appareil APP. Au sens de l'invention, un appareil APP peut être notamment:
- un appareil de capture d'image, comme par exemple un appareil photo jetable, un appareil photo numérique, un appareil reflex, un scanner, un fax, un endoscope, un caméscope, une caméra de surveillance, un jouet, une caméra intégrée ou reliée à un téléphone, à un assistant personnel ou à un ordinateur, une caméra thermique, un appareil d'échographie,
- un appareil de restitution d'image comme par exemple un écran, un projecteur, un téléviseur, des lunettes de réalité virtuelle ou une imprimante,
- un être humain ayant des défauts de vision, par exemple l'astigmatisme,
- un appareil auquel on veut ressembler, pour produire des images ayant par exemple un aspect similaire à celles produites par un appareil de marque Leica,
- un dispositif de traitement d'images, par exemple un logiciel de zoom qui a comme effet de bord d'ajouter du flou,
- un appareil virtuel équivalent à plusieurs appareil APP,

Un appareil APP plus complexe comme un scanner/fax/imprimante, un Minilab d'impression photo, un appareil de vidéo-conférence peut être considéré comme un appareil APP ou plusieurs appareils APP.

### Chaîne d'appareils

En se référant notamment à la figure 6, on va maintenant décrire la notion de chaîne d'appareils P3. On appelle chaîne d'appareils P3 un ensemble d'appareils APP. La notion de chaîne d'appareils P3 peut en outre inclure une notion d'ordre.

Les exemples suivants constituent des chaînes d'appareils P3:
- un seul appareil APP,
- un appareil de capture d'image et un appareil de restitution d'image,
- un appareil photo, un scanner, une imprimante par exemple dans un Minilab de tirage photo,
- un appareil photo numérique, une imprimante par exemple dans un Minilab de tirage photo,
- un scanner, un écran ou une imprimante, par exemple dans un ordinateur,
- un écran ou projecteur et l'oeil d'un être humain,
- un appareil et un autre appareil auquel on veut ressembler,
- un appareil photo et un scanner,
- un appareil de capture d'image, un logiciel de traitement d'images,
- un logiciel de traitement d'images, un appareil de restitution d'image,
- une combinaison des exemples précédents,
- un autre ensemble d'appareils APP.

### Défaut

En se référant notamment à la figure 6, on va maintenant décrire la notion de défaut P5. On appelle défaut P5 de l'appareil APP, un défaut lié aux caractéristiques de l'optique et/ou du capteur et/ou de l'électronique et/ou du logiciel intégré à un appareil APP ; des exemples de défauts P5 sont par exemple la distorsion, le flou, le vignetage, les aberrations chromatiques, le rendu des couleurs, l'uniformité du flash, le bruit du capteur, le grain, l'astigmatisme, l'aberration sphérique.

### Image

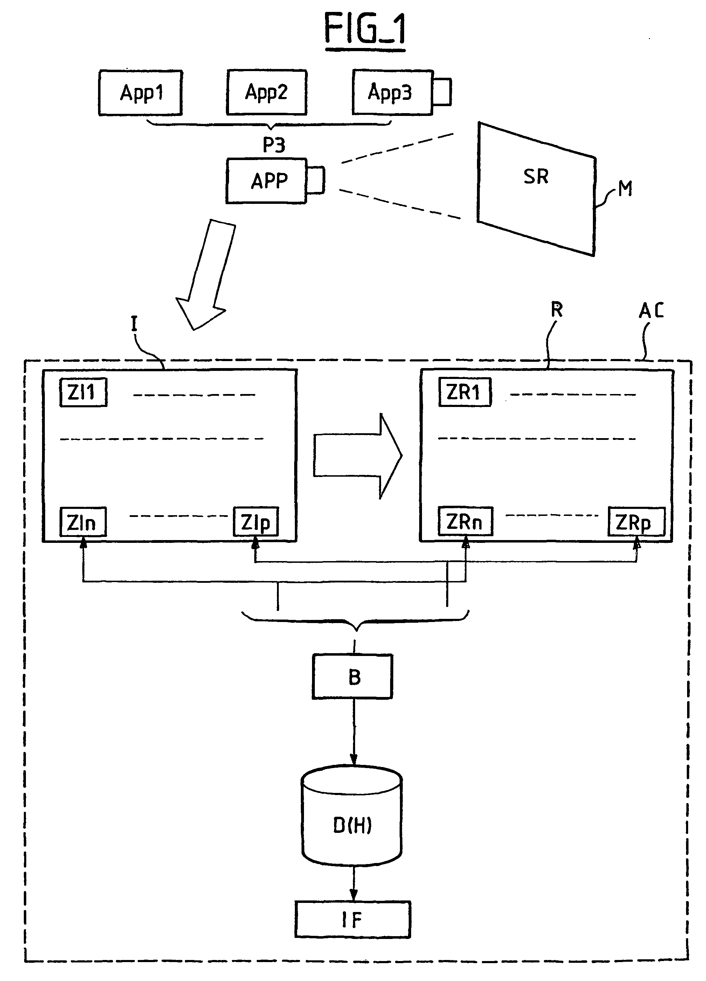

En se référant notamment aux figures 1 et 6, on va maintenant décrire la notion d'image I. On appelle image I une image capturée ou modifiée ou restituée par un appareil APP. L'image I peut provenir d'un appareil APP de la chaîne d'appareils P3. L'image I peut être destinée à un appareil APP de la chaîne d'appareils P3. De manière plus générale l'image I peut provenir et/ou être destinée à la chaîne d'appareils P3. Dans le cas d'images animées, par exemple vidéo, constituées d'une séquence dans le temps d'images fixes, on appelle image I : une image fixe de la séquence d'images.

### Informations formatées

En se référant notamment à la figure 6, on va maintenant décrire la notion d'informations formatées IF. On appelle informations formatées IF des données liées aux défauts P5 d'un ou plusieurs appareils APP de la chaîne d'appareils P3 et permettant de calculer une image transformée I-transf en tenant compte des défauts P5 de l'appareil APP. Pour produire les informations formatées IF, on peut utiliser divers procédés basés sur des mesures, et/ou des captures ou restitution de références, et/ou des simulations.

Pour produire les informations formatées IF, on peut par exemple utiliser le procédé décrit dans la demande de brevet international déposée le même jour que la présente demande au nom de la société Vision IQ et sous le titre : "Procédé et système pour fournir, selon un format standard, des informations formatées à des moyens de traitement d'images." Dans cette demande, il est décrit un procédé pour fournir, selon un format standard, des informations formatées IF à des moyens de traitement d'images, notamment des logiciels et/ou des composants. Les informations formatées IF sont liées aux défauts d'une chaîne d'appareils P3. La chaîne d'appareils P3 comprend notamment au moins un appareil de capture d'image et/ou un appareil de restitution d'image. Les moyens de traitement d'images utilisent les informations formatées IF pour modifier la qualité d'au moins une image provenant ou destinée à la chaîne d'appareils P3. Les informations formatées IF comportent des données caractérisant des défauts P5 de l'appareil de capture d'image, notamment les caractéristiques de distorsion, et/ou des données caractérisant des défauts de l'appareil de restitution des images, notamment les caractéristiques de distorsion.

Le procédé comprend l'étape de renseigner au moins un champ du format standard avec les informations formatées IF. Le champ est désigné par un nom de champ. Le champ contenant au moins une valeur de champ.

Pour rechercher les informations formatées IF, on peut par exemple utiliser le procédé décrit dans la demande de brevet international déposée le même jour que la présente demande au nom de la société Vision IQ et sous le titre : "Procédé et système pour modifier la qualité d'au moins une image provenant ou destinée à une chaîne d'appareils." Dans cette demande, il est décrit un procédé pour modifier la qualité d'au moins une image provenant ou destinée à une chaîne d'appareils déterminée. La chaîne d'appareils déterminée comprend au moins un appareil de capture d'image et/ou au moins un appareil de restitution d'image. Les appareils de capture d'image et/ou les appareils de restitution d'image, progressivement mis sur le marché par des acteurs économiques distincts, appartiennent à un ensemble indéterminé d'appareils. Les appareils de l'ensemble d'appareils présentent des défauts qui peuvent être caractérisés par des informations formatées. Le procédé comprend, pour l'image concernée, les étapes suivantes :
- l'étape de répertorier des sources d'informations formatées relatives aux appareils de l'ensemble d'appareils,
- l'étape de rechercher de manière automatique, parmi les informations formatées ainsi répertoriées, des informations formatées spécifiques relatives à la chaîne d'appareils déterminée,
- l'étape de modifier de manière automatique l'image au moyen de logiciels de traitement d'images et/ou de composants de traitement d'images en tenant compte des informations formatées spécifiques ainsi obtenues.

Pour produire les informations formatées IF, on peut par exemple utiliser le procédé décrit dans la demande de brevet international déposée le même jour que la présente au nom de la société Vision IQ et sous le titre : "Procédé et système pour réduire la fréquence des mises à jour de moyens de traitement d'images." Dans cette demande, il est décrit un procédé pour réduire la fréquence des mises à jour de moyens de traitement d'images, notamment un logiciel et/ou un composant. Les moyens de traitement d'images permettant de modifier la qualité des images numériques provenant ou destinées à une chaîne d'appareils. La chaîne d'appareil comporte au moins un appareil de capture d'image et/ou au moins un appareil de restitution d'image. Les moyens de traitement d'image mettent en oeuvre des informations formatées liées aux défauts d'au moins un appareil de la chaîne d'appareils. Les informations formatées dépendent d'au moins une variable. Les informations formatées permettant d'établir une correspondance entre une partie des variables et des identifiants. Les identifiants permettent de déterminer la valeur de la variable correspondante à l'identifiant en tenant compte de l'identifiant et de l'image. Il résulte de la combinaison des traits techniques qu'il est possible de déterminer la valeur d'une variable, notamment dans le cas où la signification physique et/ou le contenu de la variable ne sont connus que postérieurement à la diffusion des moyens de traitement d'image. Il résulte également de la combinaison des traits techniques que le temps entre deux mises à jour du logiciel de correction peut être espacé. Il résulte également de la combinaison des traits techniques que les divers acteurs économiques qui produisent des appareils et/ou des moyens de traitement d'image peuvent mettre à jour leurs produits indépendamment des autres acteurs économiques, même si ces derniers changent radicalement les caractéristiques de leurs produit ou ne peuvent forcer leur client à mettre à jour leur produits. Il résulte également de la combinaison des traits techniques qu'une nouvelle fonctionnalité peut être déployée progressivement en commençant par un nombre limité d'acteurs économiques et d'utilisateurs pionniers.

Pour exploiter les informations formatées IF, on peut par exemple utiliser le procédé et le système décrits dans la demande de brevet international déposée le même jour que présente demande au nom de la société Vision IQ et sous le titre : "Procédé et système pour modifier une image numérique en prenant en compte son bruit." Dans cette demande, il est décrit un procédé pour calculer une image transformée à partir d'une image numérique et d'informations formatées IF relatives à des défauts P5 d'une chaîne d'appareils P3. La chaîne d'appareils P3 comporte des appareils de capture d'image et/ou des appareils de restitution d'image. La chaîne d'appareils P3 comporte au moins un appareil APP. Le procédé comprend l'étape de déterminer automatiquement des données caractéristiques à partir des informations formatées IF et/ou de l'image numérique. Il résulte de la combinaison des traits techniques que l'image transformée ne présente pas de défaut visible ou gênant, notamment de défauts liés au bruit, pour son utilisation ultérieure.

### Caractéristique variable

On va maintenant décrire la notion de caractéristique variable CC. Selon l'invention, on appelle caractéristique variable CC un facteur mesurable et variable d'une image I à l'autre capturée, modifiée ou restituée par un même appareil APP, et ayant une influence sur le défaut P5 de l'image capturée, modifiée ou restituée par l'appareil APP, notamment :
- une variable globale, fixe pour une image I donnée, par exemple une caractéristique de l'appareil APP au moment de la capture ou de restitution de l'image liée à un réglage de l'utilisateur ou liée à un automatisme de l'appareil APP,
- une variable locale, variable dans une image I donnée, par exemple des coordonnées x, y ou ro, theta dans l'image, permettant d'appliquer le cas échéant un traitement local différent selon la zone de l'image I.

N'est en général pas considéré comme une caractéristique variable CC: un facteur mesurable et variable d'un appareil APP à l'autre mais fixe d'une image I à l'autre capturée, modifiée ou restituée par un même appareil APP, par exemple la focale pour un appareil APP à focale fixe.

Les informations formatées IF peuvent dépendre d'au moins une caractéristique variable CC.

Par caractéristique variable CC, on peut entendre notamment:
- la focale de l'optique,
- le redimensionnement appliqué à l'image (facteur de zoom numérique : grossissement d'une partie de l'image ; et/ou le sous-échantillonnage : diminution du nombre de pixels de l'image),
- la correction non linéaire de luminance, par exemple la correction de gamma,
- le rehaussement de contour, par exemple le niveau de déflouage appliqué par l'appareil APP,
- le bruit du capteur et de l'électronique,
- l'ouverture de l'optique,
- la distance de mise au point,
- le numéro de la vue sur un film,
- la sur ou sous exposition,
- la sensibilité du film ou du capteur,
- le type de papier utilisé dans une imprimante,
- la position du centre du capteur dans l'image,
- la rotation de l'image par rapport au capteur,
- la position d'un projecteur par rapport à l'écran,
- la balance des blancs utilisée,
- l'activation du flash et/ou sa puissance,
- le temps de pose,
- le gain du capteur,
- la compression,
- le contraste,
- un autre réglage appliqué par l'utilisateur de l'appareil APP, par exemple un mode de fonctionnement,
- un autre réglage automatique de l'appareil APP,
- une autre mesure réalisée par l'appareil APP.

### Valeur de caractéristique variable

On va maintenant décrire la notion de valeur de caractéristique variable VCV. On appelle valeur de caractéristique variable VCV la valeur de la caractéristique variable CC au moment de la capture, modification ou restitution d'une image I déterminée.

### Description générale du procédé

La figure 1 représente un système selon l'invention comportant un algorithme de calcul AC permettant de produire un champ mesuré D (H) et mettant en oeuvre :
- un référentiel M qui peut être une scène de référence (SR).
- une image I.
- une image de référence R calculée à partir de l'image I.

Selon un exemple de réalisation du système de l'invention mettant en oeuvre le procédé de l'invention, on prévoit une étape de réalisation de l'image I à l'aide de l'appareil APP ou de la chaîne d'appareils. Il peut s'agir d'appareils de capture d'image comme cela est représenté sur la figure 1. Il peut s'agir également d'appareils de restitution d'image tel que dans un système de projection. Dans le cas d'un système de capture d'images, l'image I peut être produite par un capteur (CCD par exemple), ou dans le cas d'un système de restitution d'images, l'image I peut être celle visualisée sur un écran de projection ou celle, par exemple, matérialisée sur une feuille de papier d'une imprimante.

L'image I est obtenue du référentiel M à l'aide de l'appareil APP ou d'une chaîne d'appareils. Une chaîne d'appareils est un ensemble d'appareils permettant d'obtenir une image. Par exemple, une chaîne d'appareils App1/App2 /App3 pourra comprendre un appareil de capture d'images, un scanner, un appareil d'impression, etc. L'image I comporte donc des défauts liés à ces appareils notamment la distorsion, le vignetage, le chromatisme, le flou...

Il est possible sans que cela soit obligatoire, de choisir des caractéristiques variables CC de l'appareil (ou de la chaîne d'appareils) APP parmi celles utilisées pour obtenir l'image I avec l'appareil APP. Les caractéristiques variables d'un appareil ou d'une chaîne d'appareils peuvent comprendre la focale de l'optique d'un appareil, la mise au point, l'ouverture, la balance des blancs, le numéro de la photo dans un ensemble de photos, le zoom numérique, les caractéristiques d'une capture partielle d'image (« crop » en terminologie anglo-saxonne), ....

Il sera possible, mais sans que cela soit nécessaire, selon une réalisation de l'invention de connaître un certain nombre de valeurs des caractéristiques variables VCV de l'image au moment de la prise de vue de sorte que la connaissance de ces valeurs fige les caractéristiques variables et se ramène à traiter le cas d'une image I issue d'un appareil sans caractéristiques variables.

L'image I peut se subdiviser, comme montré sur la figure 1, en une somme de zones image ZI, de formes quelconques et non nécessairement contiguës. Une zone image ZI pourra par exemple être une fenêtre rectangulaire.

L'image de référence R est déduite de l'image I et doit être considérée comme parfaite ou comme quasi-parfaite. Nous verrons ultérieurement un exemple de réalisation de l'image de référence R. On appellera une zone de référence ZR homologue à une zone image ZI, une zone dans l'image de référence R de même forme et de même emplacement que la zone image ZI à laquelle elle est associée, de sorte que par exemple si la zone ZI est une fenêtre rectangulaire de 100x100 pixels alors la zone ZR correspondante dans l'image de référence sera de 100x100 pixels et sera située au même endroit.

Du point de vue de la conception du système, les images I et R sont numériques et sont enregistrées en mémoire de manière connue, où elles sont traitées.

### Construction d'un champ mesuré D(H)

Selon un exemple de réalisation du système et/ou du procédé de l'invention, on prévoit de choisir une base B de représentation d'une zone image ZI et de sa zone de référence homologue ZR.

Le choix de la base B sera implicite ou bien alors renseigné dans les informations formatées. Au sens de la présente invention l'homme de l'art conçoit qu'il est possible de représenter une image numérique (par exemple I) dans un espace vectoriel de dimension égale au nombre de pixels. On entend par base B, et ce de façon non exclusive, une base au sens mathématique du terme de cet espace vectoriel et/ou un sous espace vectoriel de celui-ci.

Par la suite, on appelle fréquence, un identifiant relatif à chaque élément de la base. L'homme de l'art comprend les transformations de Fourier et/ou transformées en ondelettes comme des changements de base de l'espace des images. Dans le cas d'un appareil APP pour lequel les défauts de flou n'affectent de façon significative qu'un sous espace de l'espace vectoriel des images il sera nécessaire de ne corriger que les composantes de l'image I appartenant à ce sous espace. Ainsi la base B sera de préférence choisie comme une base de représentation de ce sous espace.

Une autre façon de mettre en oeuvre le procédé au sens de l'invention est de choisir une base de représentation de l'image optimale au sens par exemple de celui du temps de calcul. Cette base pourra être choisie de dimension petite, chaque élément de la base ayant un support de quelques pixels localisés spatialement dans l'image I (par exemple les Splines ou les ensemble d'opérateurs de variations locales Laplacien, Laplacien de Laplacien ou dérivées d'ordre supérieure...) .

L'appareil induit du flou dans l'image I. La transformation entre l'image « idéale sans flou » et l'image flouée I est réalisée par un opérateur de flou. L'homme de l'art sait qu'une façon de choisir un opérateur de flou est notamment de prendre un opérateur linéaire, c'est à dire une convolution. L'image I étant spatialement définie sur un espace d'image fini (nombre de pixels fixé) l'opérateur linéaire peut se représenter sous forme matricielle. Déflouer équivaut à inverser l'opérateur et donc dans ce cas à inverser la matrice. On peut alors choisir la base B qui rend la matrice à peu près diagonale, ou bien encore choisir une sous base qui conserve les axes comportant l'information la plus significative.

Le choix de cette base B de représentation est fait de manière à obtenir des informations, relatives à l'image I et à l'image de référence R, compactes et exprimées dans un espace de représentation propice à l'observation et la modélisation du ou des défauts analysés.

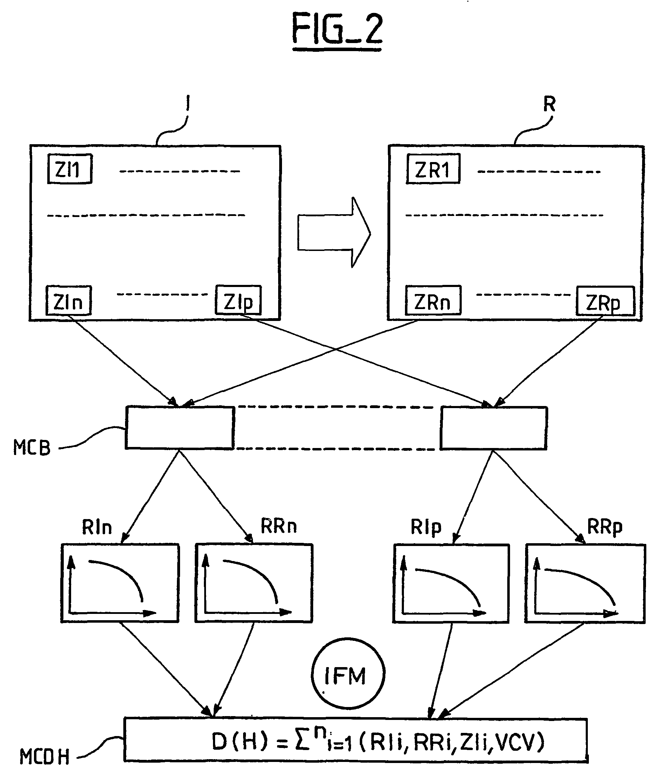

Dans un exemple de réalisation du procédé décrit sur la figure 2, nous avons choisi de transformer à l'aide de moyens de calculs MCB les zones image ZI et de référence ZR dans la base B par une transformée de Fourier et d'extraire respectivement une représentation image RI et une représentation de référence RR qui peuvent par exemple être calculées à partir du module de la transformée de Fourier respectivement de la zone image ZI et de la zone de référence homologue ZR. Une façon simple de représenter RI et/ou RR de façon informatique est d'utiliser un formalisme de vecteur normalisé où chaque composante du vecteur est caractéristique d'une fréquence du signal contenue dans ZI et/ou ZR (par exemple : première composante caractérisant les basses fréquences, la dernière composante caractérisant les hautes fréquences), et chaque valeur de composante est caractéristique de l'énergie du signal à la fréquence considérée.

Ce processus de calcul des représentation image RI et représentation de référence RR est itéré pour l'ensemble des zones image ZI de l'image I. Le moyen de calcul MCDH fournit alors le champ mesuré D(H) . Chaque élément du champ mesuré D (H) se compose alors d'un triplet formé :
- d'une zone image ZI et/ou d'un identifiant de ladite zone image (par exemple les coordonnées du rectangle caractérisant ZI)
- de la représentation image RI relative à ladite zone image ZI
- de la représentation de référence RR relative à la zone de référence ZR, homologue de ladite zone image ZI.

Le champ mesuré D(H) peut en outre comprendre la ou les valeurs pour la dite image I de l'ensemble des valeurs de caractéristiques variables VCV du dispositif d'acquisition et/ou de restitution au moment de la création de l'image I, de sorte qu'on obtient un champ mesuré qui caractérise un défaut dénommé flou au sens de la présente invention.

On appelle information formatée mesurée IFM relative au défaut de flou, toute combinaison réalisée à partir d'un élément de D(H) et/ou des valeurs de caractéristiques variables VCV et/ou des zones images ou de référence et/ou du choix de la base B.

Un exemple d'information formatée mesurée réalisable est de prendre (la zone image ZI, la zone référence ZR, la base B, les valeurs de caractéristiques variables VCV) ou encore (la zone image ZI, la représentation image RI, la représentation de référence RR, les valeurs de caractéristiques variables VCV) ou toute autre combinaison.

### Création de la référence R

Nous avons vu dans la description précédente que le calcul de l'image de référence R se réalise à partir de l'image I. L'image de référence R comporte des pixels de référence, et chaque pixels de référence possède une valeur de pixel de référence qui sera calculée à partir des valeurs de luminance de I en réalisant un sous échantillonnage. On entend par sous échantillonnage au sens de la présente invention soit un sous échantillonnage spatial, soit en nombre de valeur de pixel (quantification), soit en nombre d'éléments de la base ..., de sorte que l'image de référence R possède les mêmes défauts issus du système d'acquisition et/ou de restitution que l'image I à l'exception du flou.

Le référentiel M doit posséder des caractéristiques nécessaires à la caractérisation du flou introduit par les appareils d'acquisition et/ou de restitution. Par exemple le référentiel M doit être choisi de manière :
- à comporter des éléments dont la répartition en taille et dont la géométrie s'étendent sur un large spectre, c'est à dire comporter un signal dont sa représentation dans la base B, notamment fréquentielle, doit présenter des informations denses pour l'ensemble de fréquences qu'il convient d'analyser. Le caractère dense de l'information peut être exprimé à titre d'exemple par le fait que la représentation log(amplitude) en fonction du logarithme de la fréquence log(fréquence) est presque une droite.
- à présenter une indépendance quant à sa représentation dans la base B pour des conditions de prise de vues changeantes (changement de cadrage, rotation, changement d'éclairage ...)
- à présenter une luminance quantifiée en chacun de ses points, par exemple binaire et dans ce cas le référentiel est constitué de points noirs et blancs.

Une façon simple de réaliser un référentiel M est d'utiliser l'image quantifiée d'une scène naturelle qui possède les propriétés précédemment évoquées. Le référentiel M peut être alors une photographie binarisée d'une scène naturelle.

La capture ou la restitution du référentiel M peut être également remplacée par une simulation de l'appareil ou une mesure sur un banc pour produire l'image I, de sorte que le champ d'application du procédé couvre également des applications métrologiques.

Le procédé comprend alors l'étape de capturer et/ou restituer le référentiel M à partir de l'appareil APP pour produire l'image I. L'image I comprend donc un certain nombre de défauts issus de l'appareil APP et notamment le flou. L'effet de flou se caractérise dans l'image I notamment par :
- le fait que, pour l'exemple considéré, l'information de luminance dans l'image I n'est plus binaire, alors qu'elle l'était sur le référentiel M,
- le fait qu'un certain nombre de détails du référentiel M n'existe plus dans l'image I.

Selon un procédé propre à l'invention, il est possible de calculer une image de référence R à partir de I, en idéalisant l'image I compte tenu de la quantification initiale du référentiel M. Dans le cas où M est binaire, l'image de référence R peut se calculer à partir d'une quantification sur un bit (binaire) de l'image I. R représente alors l'image idéale, donc sans flou, que l'on aurait pu obtenir du référentiel M à l'exclusion des détails qui n'ont pas été rendus dans l'image I.

En effet, il existe un certain nombre de détails qui à cause du flou ont disparu entre le référentiel M et l'image I, soit ils ont été détruits par le flou, soit le flou les a ramenés à un niveau inférieur ou égal au bruit dans l'image I. Dans l'objectif d'enlever le flou de l'image I, il est illusoire de vouloir retrouver ces détails. Un exemple de réalisation du procédé de la présente invention, nous permet de générer une image de référence R correspondant à l'image I et exempte de flou, au sens de l'information que l'image I a réellement perçue. Il est à noter que l'image de référence R et le référentiel M ne contiennent pas les même niveaux de détails au sens où les détails non perçus dans I n'existeront pas de fait dans l'image de référence R. Ce procédé va permettre de fournir des informations formatées relatives au flou, permettant de déflouer les détails qui n'ont pas été perdus sans pour autant nécessairement chercher à recréer l'ensemble des détails de M. En effet ce dernier point peut rajouter des artefacts dans l'image déflouée.

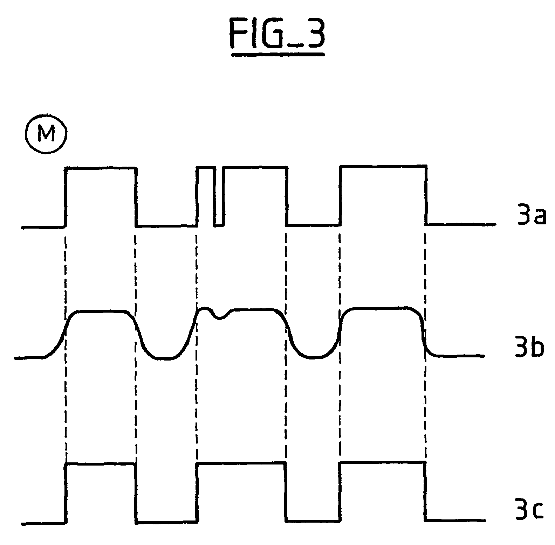

La figure 3 présente :
sur la ligne 3a le signal de luminance d'une ligne du référentiel M,
sur la ligne 3b, le même signal capturé par l'appareil APP et obtenu dans l'image I,
sur la ligne 3c, le signal de référence obtenu à partir de celui de la ligne 3b.

Comme on peut le voir sur la figure 3, les signaux rectangulaires de la ligne 3a se trouvent déformés en ligne 3b, puis retrouvent une forme idéale sur la ligne 3c à l'exclusion des détails DET qui n'ont pas été perçus par I.

La quantification de l'image de référence R (à un bit ou plus selon les représentations du référentiel M) peut se faire à titre d'exemple
- de façon globale sur l'image I,
- de façon locale sur des zones d'analyse,
- intégrer des informations statistiques sur la luminance de l'image I pour optimiser l'estimation du rapport signal sur bruit et quantifier le signal à 1 et le bruit à 0.

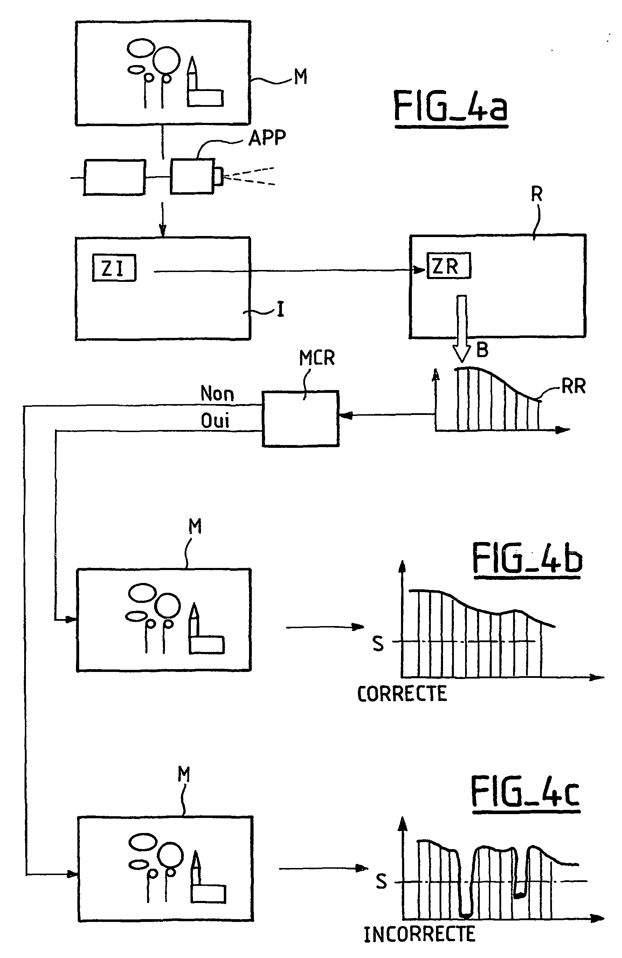

La figure 4a montre des moyens de calculs MCR mettant en oeuvre un second exemple de réalisation de l'image de référence R, à partir d'un référentiel M. Sur la figure 4a, le référentiel M est capturé par l'appareil APP pour produire l'image I. On sélectionne une zone image ZI et on calcule une transformation sur ZI pour créer la zone de référence homologue ZR. La représentation de référence RR de la zone de référence ZR dans la base B doit être telle que si le référentiel M est correctement choisi : le pourcentage de valeurs numériques inférieures à un premier seuil déterminé soit inférieur à un second seuil prédéterminé, notamment 1%. Le premier seuil peut être lié au bruit de l'appareil et le second seuil permet par exemple dans le cas d'une représentation en fréquences de couvrir presque toute la plage de fréquences transmise par l'appareil APP et/ou la chaîne d'appareils. C'est le moyen de calcul MCR qui permet de réaliser cette sélection.

Ceci se traduit pour l'exemple représenté en figure 4b, c qu'il ne doit pas y avoir plus de 1% de signal inférieur au seuil S. La figure 4c est caractéristique de l'incapacité du référentiel M à générer une information mesurable aux fréquences présentant une énergie inférieure au seuil S. la figure 4b est quant à elle révélatrice d'un référentiel M adapté aux caractéristiques de l'appareil APP.

Nous avons précédemment écrit que l'image I issue de l'appareil APP et représentant le référentiel M incorporait en son sein l'ensemble des défauts de l'appareil et/ou de la chaîne d'appareils. Il est possible selon le procédé de l'invention de réaliser en outre une ou des étapes de pré-traitement sur l'image I (par exemple compensation de la distorsion, du vignetage, du chromatisme, gamma, rayures ...) de sorte qu'il ne reste dans I que le défaut de flou qui devient alors caractéristique de l'appareil APP et des algorithmes de pré-traitements.

### Informations formatées étendues, notion d'écart

Nous avons vu que le champ mesuré D(H) relatif à l'image I, est constitué d'un ensemble d'informations formatées mesurées IFM1...IFMm. Une information formatée mesurée relative à une zone image ZI comprend par exemple :
- la zone image ZI ou un identifiant de la zone,
- la représentation image RI,
- la représentation de référence RR,
- les valeurs des caractéristiques variables sélectionnées pour l'image I,

L'exploitation du système conduira à être obligé de traiter un grand nombre de zones image et donc un grand nombre d'informations. Pour assouplir le fonctionnement du système, accélérer le traitement et/ou être robuste aux erreurs de mesures, l'invention prévoit de déduire, à partir des informations formatées mesurées IFM1 à IFMm des informations formatées étendues IFE1 à IFEm appartenant à une surface ou une hyper-surface SP pouvant être représentée par une fonction choisie dans un espace de dimension limitée comme par exemple un polynôme d'ordre limité choisi parmi la classe des polynômes de degrés fini, ou une fonction spline de degrés approprié ou toute autre fonction d'interpolation.

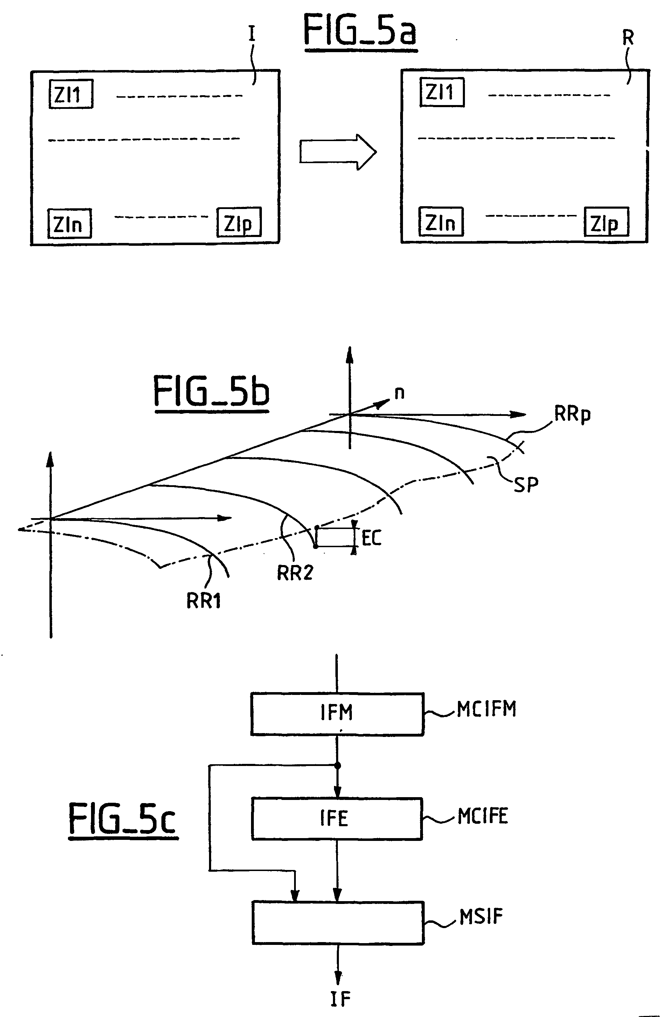

La figure 5 représente un exemple extrêmement simplifié correspondant à un cas où l'information formatée mesurée IFM est uniquement constituée par les représentations de référence RR : RR1...RRp. La figure 5b représente entre autre l'ensemble de représentation de référence RR pour les p zones de référence ZR analysées sur l'image R de la figure 5a.

Le procédé de l'invention consiste à calculer un modèle paramétrable, tel qu'une surface polynomiale SP. Une façon particulière de calculer SP peut être de calculer cette surface, en passant par toutes les informations formatées mesurées ou en passant à proximité. Sur la figure 5b la surface SP passe par/ou à proximité de l'ensemble de représentations RR1...RRm de sorte que :
- la paramétrisation de la surface SP soit en outre beaucoup plus compacte en place mémoire que l'ensemble des représentations de référence RR,
- la surface SP permettent d'obtenir des mesures plus robustes au bruit,
- la surface SP permette le cas échéant d'interpoler des profils de référence RRi sur des zones qui ne correspondent pas à des zones de mesure.

Dans ces conditions, lors du traitement d'une image, au lieu d'avoir recours à un grand nombre d'informations formatées mesurées, le système pourra utiliser un modèle paramétrable.

La difficulté est de trouver une surface SP passant par tous les points ou à proximité de tous ces points. On prévoit d'admettre qu'il puisse exister un écart EC entre une information formatée mesurée IFM et une information formatée étendue IFE similaire de IFM mais extraite de SP. De plus, on décide qu'un tel EC ne doit pas excéder un certain seuil dS. Dans ces conditions, il conviendra de faire passer une surface polynomiale par tous les points d'informations formatées mesurées IFM ± dS.

Le choix de ce seuil sera fait en adéquation avec les erreurs de prise de vue, les erreurs de mesures, le niveau de précision requis pour la correction, etc. Le procédé mis en oeuvre pourra prévoir d'utiliser un nombre déterminé de modèles paramétrables pouvant s'écrire si possible par exemple sous la forme de polynômes. On prévoit de classer ces modèles par ordre de complexité croissante.

Ensuite, possédant un ensemble d'informations mesurées, on teste chaque modèle en partant de préférence du modèle le plus simple (le polynôme d'ordre le plus faible) jusqu'à obtenir un modèle qui définisse, à l'intersection de la surface polynomiale et de la direction de chaque information formatée mesurée, une information formatée étendue dont l'écart EC avec l'information formatée mesurée soit inférieur au seuil dS.

Le procédé schématisé par les figures 5a, 5b, est destiné à obtenir des informations formatées étendues. Cependant, le procédé de l'invention pourrait se limiter à n'utiliser comme informations formatées que les informations formatées mesurées. On peut également prévoir d'utiliser, pour les informations formatées, les informations formatées mesurées et les informations formatées étendues.

Quoiqu'il en soit, on peut prévoir également d'associer aux informations formatées, les écarts EC trouvés entre informations formatées mesurées et informations formatées étendues. Les informations formatées peuvent ainsi être utilisées par des logiciels de traitement d'images pour obtenir des images dont le résiduel est connu que ce soit pour des images capturées par un appareil de capture d'images ou pour des images restituées par un appareil de restitution d'images.

Le système représenté en figure 5c, comprendra des moyens de calcul MCIFM, des moyens de calculs MCIFE et de moyens de sélection MSIF.

### Zone image quelconque ZIQ

Le procédé selon l'invention permet par l'utilisation d'un modèle paramétrable tel que la surface polynomiale SP de déterminer des informations formatées étendues pour des zones image quelconque ZIQ. Il est toutefois possible d'extraire ces informations formatées étendues pour des zones image quelconques ZIQ sans recourir à des modèle paramétrables SP en réalisant par exemple des interpolations simples (linéaires, bilinéaire) entre les information formatées mesurées.

### Caractéristiques variables de la chaîne d'appareils

Dans ce qui précède, on a vu qu'une information formatée pouvait contenir des caractéristiques variables. S'il s'agit d'un nombre limité de caractéristiques variables ou d'une seule caractéristique variable présentant une quantification donnée (par exemple 3 valeurs de focale pour un appareil photographique), une mise en oeuvre du procédé de l'invention consiste à itérer n fois le processus préalablement décrit.

En fait, de façon pratique il pourra s'agir d'une combinaison de caractéristiques variables telle que par exemple une combinaison de la focale, de la mise au point, de l'ouverture de diaphragme, de la vitesse de capture, de l'ouverture, etc. Il est difficilement pensable de calculer les informations formatées relatives aux différentes combinaisons d'autant que certaines caractéristiques de la combinaison peuvent varier de façon continue telles que notamment la focale et la distance de mise au point. Une façon d'analyser les paramètres influents pour déterminer le choix des combinaisons pertinentes peut être de réaliser une analyse en composante principale, technique connue de l'homme de l'art.

Le procédé de l'invention prévoit de calculer par interpolation les informations formatées à partir d'informations formatées mesurées pour des combinaisons de caractéristiques variables connues. Le recours à un modèle paramétrable tel qu'une surface polynomiale SP nécessitera l'introduction dans ses arguments de contrôle des information formatées mesurées et des valeurs des caractéristiques variables VCV relatives à la mesure réalisée. De façon analogue à précédemment il existera un écart EC entre les informations formatées mesurées et les informations formatées étendues issues du modèle paramétrable. Cet écart EC ne doit pas excéder un certain seuil dS et dans ces conditions, il conviendra de faire passer une surface polynomiale SP par tous les points d'informations formatées mesurées IFM ± dS. Le choix de ce seuil sera fait en adéquation avec les erreurs de prise de vue, les erreurs de mesures, le niveau de précision requis pour la correction, etc.

L'invention mise en oeuvre pourra prévoir le cas échéant d'utiliser un nombre déterminé de modèles paramétrables pouvant s'écrire si possible par exemple sous la forme de polynômes. On prévoit de classer ces modèles par ordre de complexité croissante.

Ensuite, possédant un ensemble d'informations mesurées, on teste chaque modèle en partant de préférence du modèle le plus simple (le polynôme d'ordre le plus faible) jusqu'à obtenir un modèle qui définisse, à l'intersection de la surface polynomiale et de la direction de chaque information formatée mesurée, une information formatée étendue dont l'écart EC avec l'information formatée mesurée soit inférieur au seuil dS.

Le procédé prévoie le cas échéant d'inclure l'écart EC dans les informations formatées de sorte que cette information puisse être éventuellement utilisée par des logiciels de traitement d'images.

### Image couleur

Le procédé selon l'invention permet de calculer des informations formatées relatives à une image couleur. Une image couleur peut être considérée comme étant constituée de plusieurs plans monochromes. Classiquement on peut considérer qu'une image couleur est une image trichrome constituée de trois images monochromes rouge, vert, bleu ou de longueur d'onde proche. Elle peut également selon certains capteurs être constituée de quatre plans cyan, magenta, jaune, noir. On peut alors mettre en oeuvre l'algorithme de calcul AC sur au moins deux des plans couleurs. Un exemple de réalisation d'information formatées consiste à mettre en oeuvre l'algorithme de calcul AC pour chaque plan couleur, de sorte qu'il est possible d'utiliser les informations formatées et/ou les informations formatées étendues, et/ou les informations formatées mesurées pour corriger le flou monochromatique et poly-chromatique, au sens de la présente invention, de l'appareil APP et/ou de la chaîne d'appareils de capture et/ou de restitution. On notera qu'il est possible selon une façon de mettre en oeuvre le procédé de l'invention d'utiliser la même image de référence R pour chacun des plans de l'image couleur.

Le procédé selon l'invention permet de calculer des information formatées relatives à une image monochromatique et/ou poly-chromatique de sorte que lesdites informations formatées et/ou lesdites informations formatées mesurées peuvent être utilisées par des logiciels de traitement d'images capturées par un premier appareil de capture d'images, pour obtenir des images de qualité comparable, en terme de défauts, à celle du second appareil de capture d'image. Par exemple il est possible de générer des images ayant une ressemblance désuète (look retro).

Selon également une autre mise en oeuvre du procédé de l'invention les informations formatées et/ou lesdites informations formatées mesurées peuvent être utilisées par des logiciels de traitement d'images à restituer par le premier appareil de restitution, pour obtenir des images de qualité comparable, en terme de défauts, à celle restituées par ledit second appareil de restitution.

### Application de l'invention à la réduction de coût

On appelle réduction de coût, un procédé et système pour diminuer le coût d'un appareil APP ou d'une chaîne d'appareils P3, notamment le coût de l'optique d'un appareil ou d'une chaîne d'appareils; le procédé consistant à :
- diminuer le nombre de lentilles, et/ou
- simplifier la forme des lentilles, et/ou
- concevoir ou choisir dans un catalogue une optique ayant des défauts P5 plus importants que ceux souhaités pour l'appareil ou la chaîne d'appareils, et/ou
- utiliser des matériaux, composants, traitements ou procédés de fabrication moins coûteux pour l'appareil ou la chaîne d'appareils, ajoutant des défauts P5.

Le procédé et système selon l'invention peut être utilisé pour diminuer le coût d'un appareil ou d'une chaîne d'appareils : on peut concevoir une optique numérique, produire des informations formatées IF relatives aux défauts de l'appareil ou à la chaîne d'appareils, utiliser ces informations formatées pour permettre à des moyens de traitement d'image, intégrés ou non, de modifier la qualité des images provenant ou destinées à l'appareil ou à la chaîne d'appareils, de sorte que la combinaison de l'appareil ou la chaîne d'appareil et des moyens de traitement d'image permettent de capturer, modifier ou restituer des images de la qualité souhaitée avec un coût réduit.

## Revendications

1. Procédé pour produire des informations formatées (IF) liées aux appareils (App1, App2 , App3) d'une chaîne d'appareils (P3,APP); ladite chaîne d'appareils (P3,APP) comprenant notamment au moins un appareil de capture d'image (App3) et/ou au moins un appareil de restitution d'image; ledit procédé comprenant l'étape de produire des informations formatées (IF) liées aux défauts (P5) liés aux caractéristiques de l'optique et/ou du capteur et/ou de l'electronique et/ou du logiciel intégré d'au moins un appareil de ladite chaîne,
ledit appareil permettant de capturer ou restituer une image (I) ; ledit appareil comportant au moins une caractéristique fixe et/ou une caractéristique variable selon l'image (I); ladite caractéristique fixe et/ou caractéristique variable (CC) étant susceptible d'être associée à une ou plusieurs valeurs de caractéristiques, notamment la focale et/ou la mise au point et leurs valeurs de caractéristiques associées (VCV);
ledit procédé comprenant l'étape de produire des informations formatées mesurées (IFM) liées aux défauts (P5) dudit appareil à partir d'un champ mesuré (D(H) composé de l'ensemble des triplets constitués :
- d'une zone image (ZI) et/ou d'un identifiant de la zone image (ZI),
- de la représentation image (RI) de la zone image (ZI),
- de la représentation de référence (RR) d'une zone de référence (ZR), et composé de la valeur, pour l'image (I), de chacune des caractéristiques variables sélectionnées ; lesdites informations formatées pouvant comprendre lesdites informations formatées mesurées.

2. Procédé selon la revendication 1 ; ledit procédé comprenant en outre l'étape de produire des informations formatées étendues (IFE) liées aux défauts (P5) dudit appareil à partir desdites informations formatées mesurées ; lesdites informations formatées pouvant comprendre lesdites informations formatées étendues ; lesdites informations formatées étendues présentant un écart (EC) par rapport auxdites informations formatées mesurées.

3. Procédé selon la revendication 2 ; ledit procédé étant tel que lesdites informations formatées, produites à partir desdites informations formatées mesurées, sont représentées par les paramètres d'un modèle paramétrable (SP) choisi parmi un ensemble de modèles paramétrables, notamment un ensemble de polynômes ; ledit procédé comprenant en outre l'étape de sélectionner ledit modèle paramétrable dans ledit ensemble de modèles paramétrables en :
- définissant un écart maximal,
- ordonnant lesdits modèles paramétrables dudit ensemble de modèles paramétrables selon leur degré de complexité de mise en oeuvre,
- choisissant le premier des modèles paramétrables dudit ensemble de modèles paramétrables ordonné pour lequel ledit écart (EC) est inférieur audit écart maximal.

4. Procédé selon l'une quelconque des revendications 2 ou 3 ; lesdites informations formatées étendues étant lesdites informations formatées mesurées.

5. Procédé selon l'une quelconque des revendications 2 à 4 ; ledit procédé comprenant un algorithme de calcul (AC) permettant d'obtenir ledit champ mesuré (D(H)) à partir d'un référentiel (M) ; ledit algorithme de calcul (AC) comprenant les étapes suivantes :
- l'étape de capturer ou de restituer ledit référentiel (M) au moyen dudit appareil pour produire une image (I),
- l'étape de choisir au moins une zone image (ZI) dans ladite image (I),
- l'étape de calculer une image de référence (R) à partir de ladite image (I),
- l'étape de déterminer, dans ladite image référence (R), une zone de référence (ZR) homologue à ladite zone image (ZI),
- l'étape de choisir une base (B) permettant de représenter tout ou partie de ladite zone image (ZI) par une représentation image (RI) et de représenter tout ou partie de ladite zone de référence (ZR) par une représentation de référence (RR),
- l'étape de sélectionner zéro, une ou plusieurs caractéristiques variables (CC) parmi l'ensemble desdites caractéristiques variables, ci-après désignées les caractéristiques variables sélectionnées ;
ledit champ mesuré (D(H)) étant composé de l'ensemble des triplets constitués :
- d'une zone image (ZI) et ou d'un identifiant de ladite zone image (ZI),
- de la représentation image (RI) de ladite zone image (ZI),
- de la représentation de référence (RR) de ladite zone de référence (ZR) ;
ledit champ mesuré (D(H)) étant en outre composé de la valeur, pour ladite image (I), de chacune desdites caractéristiques variables sélectionnées ;
de sorte qu'on obtient un champ mesuré caractérisant un défaut dénommé flou au sens de la présente invention.

6. Procédé selon la revendication 5 ; ladite image de référence (R) comportant des pixels de référence ; lesdits pixels de référence ayant chacun une valeur de pixel de référence ; ledit procédé étant tel que pour calculer ladite image de référence (R) à partir de ladite image (I), on sous-échantillonne ladite image (I), notamment pour obtenir une image de référence (R) dont les pixels de référence peuvent prendre une ou l'autre de deux valeurs de pixels de référence;
de sorte que l'image de référence (R) présente les mêmes défauts que l'image (I) à l'exclusion du flou.

7. Procédé selon l'une quelconque des revendications 5 ou 6 ; ledit procédé étant tel que on choisit ladite base (B) permettant une représentation en fréquence, notamment calculée à l'aide d'une transformée de Fourier.

8. Procédé selon l'une quelconque des revendications 5 ou 6 ; ledit procédé étant tel que on choisit ladite base (B) permettant une représentation en ondelettes ou en paquets d'ondelettes.

9. Procédé selon l'une quelconque des revendications 5 à 8 ; ledit procédé étant tel que on choisit une base linéaire comprenant un petit nombre d'éléments.

10. Procédé selon l'une quelconque des revendications 5 à 9 ; ladite représentation de référence (RR) étant constituée de valeurs numériques; ledit procédé comprenant en outre l'étape de choisir ledit référentiel (M), tel que le pourcentage de valeurs numériques inférieures à un premier seuil déterminé soit inférieur à un second seuil prédéterminé, notamment 1%.

11. Procédé selon l'une quelconque des revendications 5 à 10 ; ledit référentiel (M) étant composé d'éléments dont la répartition en taille et dont la position géométrique s'étendent sur un large spectre.

12. Procédé selon l'une quelconque des revendications 5 à 11 ; ledit référentiel (M) étant choisi de telle sorte que ladite représentation de ladite image (I) dans ladite base (B) est, auxdits défauts près, sensiblement indépendante des conditions de capture ou de restitution de ladite image (I), notamment, dans le cas d'un appareil de capture d'image, ladite représentation est indépendante de l'orientation et de la position du référentiel (M) par rapport audit appareil de capture d'image.

13. Procédé selon l'une quelconque des revendications 5 à 12 ; ledit référentiel (M) étant construit à partir d'une image quantifiée d'une scène naturelle.

14. Procédé selon l'une quelconque des revendications 5 à 13 ; ledit procédé comprenant en outre l'étape de pré-traiter ladite image (I) au moyen d'un calcul éliminant une partie desdits défauts ;
de sorte que le flou au sens de la présente invention caractérise ledit appareil et les moyens de calcul permettant d'enlever lesdits défauts.

15. Procédé selon l'une quelconque des revendications 5 à 14 ; ledit procédé comprenant en outre l'étape d'obtenir lesdites informations formatées étendues relatives à une zone image quelconque (ZIQ), en déduisant lesdites informations formatées, relatives à une zone image quelconque (ZIQ), à partir desdites informations formatées mesurées.

16. Procédé selon l'une quelconque des revendications 2 à 15 ; ledit procédé étant tel que ledit appareil de ladite chaîne d'appareil présente au moins une caractéristique variable selon l'image, notamment la focale et/ou l'ouverture ; chaque caractéristique variable étant susceptible d'être associée à une valeur pour former une combinaison constituée de l'ensemble desdites caractéristiques variables et desdites valeurs ;
ledit procédé comprenant en outre les étapes suivantes :
- l'étape de sélectionner des combinaisons prédéterminées,
- l'étape de calculer des informations formatées mesurées, notamment en mettant en oeuvre ledit algorithme de calcul (AC) pour chacune desdites combinaisons prédéterminées ainsi sélectionnées.

17. Procédé selon la revendication 16 ; on appelle argument une zone image quelconque et une desdites combinaisons ; ledit procédé comprenant en outre l'étape de déduire lesdites informations formatées étendues relatives à un argument quelconque à partir desdites informations formatées mesurées.

18. Système pour produire des informations formatées (IF) liées aux appareils (App1,App2,App3) d'une chaîne d'appareils (P3,APP); ladite chaîne d'appareils (P3,APP) comprenant notamment au moins un appareil de capture d'image (App3) et/ou au moins un appareil de restitution d'image; ledit système comprenant des moyens de calcul (MCIFM, MCIFE, MSIF) pour produire des informations formatées (IF) liées aux défauts (P5) liés aux caractéristiques de l'optique et/ou du capteur et/ou de l'electronique et/ou du logiciel intégré d'au moins un appareil de ladite chaîne,
ledit appareil permettant de capturer ou restituer une image (I) ; ledit appareil comportant au moins une caractéristique fixe et/ou une caractéristique variable (CC) selon l'image (I); ladite caractéristique fixe et/ou caractéristique variable étant susceptible d'être associée à une ou plusieurs valeurs de caractéristiques, notamment la focale et/ou la mise au point et leurs valeurs de caractéristiques associées (VCV);
ledit système comprenant des moyens de calcul (MCIFM) pour produire des informations formatées mesurées (IFM) liées aux défauts (P5) dudit appareil à partir d'un champ mesuré (D(H) composé de l'ensemble des triplets constitués :
- d'une zone image (ZI) et/ou d'un identifiant de la zone image (ZI),
- de la représentation image (RI) de la zone image (ZI)
- de la représentation de référence (RR) d'une zone de référence (ZR), et
composé de la valeur, pour l'image (I), de chacune des caractéristiques variables sélectionnées ; lesdites informations formatées (IF) pouvant comprendre lesdites informations formatées mesurées (IFM).

19. Système selon la revendication 18 ; ledit système comprenant en outre des moyens de calcul (MCIFE) pour produire des informations formatées étendues (IFE) liées aux défauts dudit appareil à partir desdites informations formatées mesurées ; lesdites informations formatées pouvant comprendre lesdites informations formatées étendues ; lesdites informations formatées étendues présentant un écart (EC) par rapport auxdites informations formatées mesurées.

20. Système selon la revendication 19 ; ledit système étant tel que lesdites informations formatées, produites à partir desdites informations formatées mesurées, sont représentées par les paramètres d'un modèle paramétrable (SP) choisi parmi un ensemble de modèles paramétrables, notamment un ensemble de polynômes ; ledit système comprenant en outre des moyens de sélection pour sélectionner ledit modèle paramétrable dans ledit ensemble de modèles paramétrables en :
- définissant un écart maximal,
- ordonnant lesdits modèles paramétrables dudit ensemble de modèles paramétrables selon leur degré de complexité de mise en oeuvre,
- choisissant le premier des modèles paramétrables dudit ensemble de modèles paramétrables ordonné pour lequel ledit écart (EC) est inférieur audit écart maximal.

21. Système selon l'une quelconque des revendications 19 ou 20 ; lesdites informations formatées étendues étant lesdites informations formatées mesurées.

22. Système selon l'une quelconque des revendications 19 à 21 ; ledit système comprenant des moyens de calcul mettant en oeuvre un algorithme de calcul (AC) permettant d'obtenir ledit champ mesuré (D(H)) à partir d'un référentiel (M) ; ledit appareil de capture d'image ou de restitution d'image comprenant des moyens pour capturer ou restituer ledit référentiel (M) pour produire une image (I) ;
lesdits moyens de calcul dudit algorithme de calcul (AC) comprenant des moyens de traitement informatique pour :
- choisir au moins une zone image (ZI) dans ladite image (I),
- calculer une image de référence (R) à partir de ladite image (I),
- déterminer, dans ladite image référence (R), une zone de référence (ZR) homologue à ladite zone image (ZI),
- choisir une base (B) permettant de représenter tout ou partie de ladite zone image (ZI) par une représentation image (RI) et de représenter tout ou partie de ladite zone de référence (ZR) par une représentation de référence (RR),
- sélectionner zéro, une ou plusieurs caractéristiques variables (CC) parmi l'ensemble desdites caractéristiques variables, ci-après désignées les caractéristiques variables sélectionnées ;
ledit champ mesuré (D(H)) étant composé de l'ensemble des triplets constitués :
- d'une zone image (ZI) et ou d'un identifiant de ladite zone image (ZI),
- de la représentation image (RI) de ladite zone image (ZI),
- de la représentation de référence (RR) de ladite zone de référence (ZR) ;
ledit champ mesuré (D(H)) étant en outre composé de la valeur, pour ladite image (I), de chacune desdites caractéristiques variables sélectionnées ;
de sorte qu'on obtient un champ mesuré caractérisant un défaut dénommé flou au sens de la présente invention.

23. Système selon la revendication 22 ; ladite image de référence (R) comportant des pixels de référence ; lesdits pixels de référence ayant chacun une valeur de pixel de référence ; ledit système étant tel que lesdits moyens de traitement pour calculer ladite image de référence (R) à partir de ladite image (I), comprennent des moyens pour sous-échantillonner ladite image (I), notamment pour obtenir une image de référence (R) dont les pixels de référence peuvent prendre une ou l'autre de deux valeurs de pixels de référence.

24. Système selon l'une quelconque des revendications 22 ou 23 ; ledit système étant tel que lesdits moyens de traitement informatique en choisissent une dite base (B) permettant une représentation en fréquence, notamment calculée à l'aide d'une transformée de Fourier.

25. système selon l'une quelconque des revendications 22 ou 23 ; ledit système étant tel que lesdits moyens de traitement informatique en choisissent une dite base (B) permettant une représentation en ondelettes ou en paquets d'ondelettes.

26. Système selon l'une quelconque des revendications 22 à 25 ; ledit système étant tel que lesdits moyens de traitement informatique choisissent une base linéaire comprenant un petit nombre d'éléments.

27. Système selon l'une quelconque des revendications 22 à 26 ; ladite représentation de référence (RR) étant constituée de valeurs numériques; ledit système comprenant des moyens de traitement informatique permettant de choisir ledit référentiel (M) de telle sorte que le pourcentage de valeurs numériques inférieures à un premier seuil déterminé soit inférieur à un second seuil prédéterminé, notamment 1%.

28. Système selon l'une quelconque des revendications 22 à 27 ; ledit référentiel (M) étant composé d'éléments dont la répartition en taille et dont la position géométrique s'étendent sur un large spectre.

29. Système selon l'une quelconque des revendications 22 à 28 ; ledit référentiel (M) étant choisi de telle sorte que ladite représentation de ladite image (I) dans ladite base (B) est, auxdits défauts près, sensiblement indépendante des conditions de capture ou de restitution de ladite image (I), notamment, dans le cas d'un appareil de capture d'image, ladite représentation est indépendante de l'orientation et de la position du référentiel (M) par rapport audit appareil de capture d'image.

30. Système selon l'une quelconque des revendications 22 à 29 ; ledit référentiel (M) étant construit à partir d'une image quantifiée d'une scène naturelle.

31. Système selon l'une quelconque des revendications 22 à 30 ; ledit système permettant en outre de pré-traiter ladite image (I) en mettant en oeuvre des moyens de calcul pour éliminer une partie desdits défauts.

32. Système selon l'une quelconque des revendications 22 à 31 ; ledit système comprenant en outre des moyens de traitement informatique permettant d'obtenir lesdites informations formatées étendues relatives à une zone image quelconque (ZIQ), en déduisant lesdites informations formatées, relatives à une zone image quelconque (ZIQ), à partir desdites informations formatées mesurées.

33. Système selon l'une quelconque des revendications 19 à 32 ; ledit système étant tel que ledit appareil de ladite chaîne d'appareil présente au moins une caractéristique variable selon l'image, notamment la focale et/ou l'ouverture ; chaque caractéristique variable étant susceptible d'être associée à une valeur pour former une combinaison constituée de l'ensemble desdites caractéristiques variables et desdites valeurs ;
ledit système comprenant en outre des moyens de calcul pour calculer des informations formatées mesurées, notamment en mettant en oeuvre ledit algorithme de calcul (AC) pour des combinaisons prédéterminées sélectionnées.

34. Système selon la revendication 33 ; on appelle argument une zone image quelconque et une desdites combinaisons ; ledit système comprenant en outre des moyens de traitement informatique pour déduire lesdites informations formatées étendues relatives à un argument quelconque à partir desdites informations formatées mesurées.

## Patentansprüche

1. Verfahren zur Erzeugung formatierter Informationen (IF), die mit den Geräten (App1,App2,App3) einer Gerätekette (P3,APP) verbunden sind; wobei diese Gerätekette (P3,APP) insbesondere mindestens ein Gerät zum Bilderfassen (App3) und/oder mindestens ein Gerät zum Entzerren von Bildern enthält; wobei das Verfahren den Schritt der Erzeugung formatierter Informationen (IF) umfaßt, die auf die Fehler (P5) in Verbindung mit den Merkmalen der Optik und/oder der Erfassung und/oder der Elektronik und/oder der integrierten Software mindestens eines Geräts dieser Kette zurückgehen;
wobei es dieses Gerät ermöglicht, ein Bild (I) zu erfassen bzw. zu entzerren; wobei dieses Gerät wenigstens ein festes Merkmal und/oder ein variables Merkmal je nach Bild (I) aufweist; wobei dieses feste und/oder variable Merkmal (CC) in der Lage ist, einem oder mehreren Werten des Merkmals, insbesondere der Brennweite und/oder der Fokussierung und ihren Werten der zugeordneten Merkmale (VCV), zugeordnet zu werden;
wobei dieses Verfahren den Schritt der Erzeugung der gemessenen formatierten Informationen (IFM) umfaßt, die mit den Fehlern (P5) dieses Geräts aus einem gemessenen Feld (D(H)), zusammengesetzt aus der Gesamtheit der gebildeten Tripel:
- einer Bildzone (ZI) und/oder eines Kennzeichens der Bildzone (ZI);
- der Bilddarstellung (RI) der Bildzone (ZI);
- der Bezugsdarstellung (RR) einer Bezugszone (ZR);
und aus dem Wert jedes der ausgewählten variablen Merkmale für das Bild (I) zusammengesetzt sind; wobei diese formatierten Informationen die gemessenen formatierten Informationen enthalten können.

2. Verfahren gemäß Anspruch 1, wobei das genannte Verfahren ferner den Schritt des Erzeugens der erweiterten formatierten Informationen (IFE), verbunden mit den Fehlern (P5) des Geräts aus den gemessenen formatierten Informationen enthält; wobei diese formatierten Informationen diese erweiterten formatierten Informationen enthalten können; wobei diese erweiterten formatierten Informationen eine Abweichung (EC) gegenüber den gemessenen formatierten Informationen aufweisen.

3. Verfahren gemäß Anspruch 2, wobei das Verfahren so ist, daß die aus den gemessenen formatierten Informationen erzeugten formatierten Informationen durch die Parameter eines durch Parameter darstellbaren Modells (SP) dargestellt werden, das aus einer Gesamtheit durch Parameter darstellbarer Modelle, insbesondere einem Satz Polynomen, ausgewählt wird; wobei dieses Verfahren ferner den Schritt der Auswahl des durch Parameter darstellbaren Modells aus der Gesamtheit der durch Parameter darstellbaren Modelle enthält, durch:
- Definieren einer maximalen Abweichung
- Ordnen der durch Parameter darstellbaren Modelle aus der Gesamtheit der durch Parameter darstellbaren Modelle nach dem Grad der Komplexität ihrer Anwendung,
- Auswählen des ersten der durch Parameter darstellbaren Modelle aus der Gesamtheit der durch Parameter darstellbaren Modelle, die so geordnet ist, daß die Abweichung (EC) geringer als die maximale Abweichung ist.

4. Verfahren gemäß einem beliebigen der Ansprüche 2 oder 3, wobei die erweiterten formatierten Informationen die gemessenen formatierten Informationen sind.

5. Verfahren gemäß einem beliebigen der Ansprüche 2 bis 4, wobei das Verfahren einen Berechnungsalgorithmus (AC) enthält, der es ermöglicht, das gemessene Feld (D(H)) aus einer Bezugsmenge (M) zu erhalten; wobei der genannte Berechnungsalgorithmus (AC) die folgenden Schritte umfaßt:
- Den Schritt des Erfassens oder Entzerrens der Bezugsmenge (M) mittels des Geräts zum Erzeugen eines Bilds (I),
- den Schritt des Auswählens mindestens einer Bildzone (ZI) in diesem Bild (I),
- den Schritt des Berechnens einer Bezugsmenge (R) aus dem genannten Bild (I)
- den Schritt des Bestimmens einer Bezugszone (ZR) in dem Bezugsbild (R), die homolog zu der genannten Bildzone (ZI) ist,
- den Schritt des Auswählens einer Unterlage (B), die es ermöglicht, die ganze oder einen Teil der Bildzone (ZI) durch eine Bilddarstellung (RI) abzubilden und die ganze oder einen Teil dieser Bezugszone (ZR) durch eine Bezugsdarstellung (RR) abzubilden,
- die Schritt des Auswählens von keinem, einem oder mehreren variablen Merkmalen (CC) aus der Gesamtheit der variablen Merkmale, nachstehend als ausgewählte variable Merkmale bezeichnet, auszuwählen;
wobei sich das gemessene Feld (D(H)) aus der Gesamtheit der gebildeten Tripel zusammensetzt, bestehend aus:
- einer Bildzone (ZI) und/oder einem Kennzeichen dieser Bildzone (ZI),
- der Bilddarstellung (RI) dieser Bildzone (ZI),
- der Bezugsdarstellung (RR) dieser Bezugszone (ZR);
wobei sich das gemessene Feld (D(H)) ferner für das Bild (I) aus dem Wert aller der ausgewählten variablen Merkmale zusammensetzt;
so daß man ein gemessenes Feld erhält, das für einen Fehler, genannt Bildschärfeverzerrung im Sinne der vorliegenden Erfindung kennzeichnend ist.

6. Verfahren gemäß Anspruch 5, wobei das Bezugsbild (R) Bezugspixel enthält; wobei diese Bezugspixel jeweils einen Bezugspixelwert haben; wobei das Verfahren so ist, daß man zum Berechnen des Bezugsbilds (R) aus dem Bild (I) diesem Bild (I) Teilproben entnimmt, insbesondere damit man ein Bezugsbild (R) erhält, dessen Bezugspixel den einen oder den anderen der zwei Bezugspixelwerte annehmen können;
so daß das Bezugsbild (R) abgesehen von der Verzerrung die gleichen Fehler aufweist, wie das Bild (I).

7. Verfahren gemäß einem beliebigen der Ansprüche 5 oder 6, wobei das Verfahren so ist, daß man die Unterlage (B) auswählt, die eine Darstellung als Frequenz ermöglicht, die insbesondere mit Hilfe einer Fourier-Transformation berechnet wird.

8. Verfahren gemäß einem beliebigen der Ansprüche 5 oder 6, wobei das Verfahren so ist, daß man die genannte Unterlage (B) auswählt, die eine Darstellung in Kleinwellen oder in Kleinwellenpaketen ermöglicht.

9. Verfahren gemäß einem beliebigen der Ansprüche 5 bis 8, wobei das Verfahren so ist, daß man eine lineare Unterlage auswählt, die eine kleine Anzahl Elemente aufweist.

10. Verfahren gemäß einem beliebigen der Ansprüche 5 bis 9, wobei die Bezugsdarstellung (RR) aus numerischen Werten besteht; das Verfahren ferner den Schritt des Auswählens des Bezugssystems (M) umfaßt, so daß der Prozentsatz der numerischen Werte, die kleiner als eine bestimmte erste Schwelle sind, gegenüber einer vorgegebenen zweiten Schwelle kleiner ist, insbesondere 1%.

11. Verfahren gemäß einem beliebigen der Ansprüche 5 bis 10, wobei das Bezugssystem (M) aus Elementen besteht, deren Verteilung nach Größe und deren geometrische Stellung sich über ein breites Spektrum erstrecken.

12. Verfahren gemäß einem beliebigen der Ansprüche 5 bis 11, wobei das Bezugssystem (M) so gewählt wird, daß die Darstellung des Bilds (I) auf der Unterlage (B) in der Nähe der Fehler deutlich unabhängig von den Bedingungen der Erfassung oder der Entzerrung des Bildes (I) ist, insbesondere im Fall eines Bilderfassungsgeräts, dessen Wiedergabe unabhängig von der Ausrichtung und der Position des Bezugssystems (M) in Bezug auf das Bilderfassungsgerät ist.

13. Verfahren gemäß einem beliebigen der Ansprüche 5 bis 12, wobei das Bezugssystem (M) nach einem quantifizierten Bild einer natürlichen Szene gebildet wird.

14. Verfahren gemäß einem beliebigen der Ansprüche 5 bis 13, wobei das Verfahren ferner einen Schritt zur Vorwegbearbeitung des Bilds (I) mittels einer Berechnung enthält, die einen Teil der genannten Fehler beseitigt;
so daß die Verzerrung im Sinn der vorliegenden Erfindung das Gerät und das Berechnungsmittel, die die Beseitigung der genannten Fehler ermöglichen, charakterisiert.

15. Verfahren gemäß einem beliebigen der Ansprüche 5 bis 14, wobei das Verfahren ferner einen Schritt zum Erfassen der erweiterten formatierten Informationen relativ zu einer beliebigen Bildzone (ZIQ) durch Ableiten der formatierten Informationen aus den gemessenen formatierten Informationen relativ zu einer beliebigen Bildzone (ZIQ) enthält.

16. Verfahren gemäß einem beliebigen der Ansprüche 2 bis 15, wobei das Verfahren so ist, daß das Gerät der Gerätekette wenigstens ein variables Merkmal gemäß dem Bild aufweist, insbesondere die Brennweite und/oder die Einführungsöffnung; wobei jedes variable Merkmal geeignet ist, einem Wert zugeordnet zu werden, um eine Kombination, bestehend aus der Gesamtheit der variablen Merkmale und dieser Werte, zu bilden;
wobei dieses Verfahren unter anderem die folgenden Schritte umfaßt:
- den Schritt der Auswahl der vorgegebenen Kombinationen,
- den Schritt der Berechnung gemessener formatierter Informationen, insbesondere durch Benutzen des Berechnungsalgorithmus (AC) für jede der vorgenannten, auf diese Weise ausgewählten Kombinationen.

17. Verfahren gemäß Anspruch 16, wobei irgendeine Bildzone und eine der Kombinationen als Argument bezeichnet wird; wobei dieses Verfahren ferner die Schritt des Ableitens dieser erweiterten formatierten Informationen relativ zu einem beliebigen Argument aus den gemessenen formatierten Informationen umfaßt.

18. System zum Erzeugen formatierter Informationen (IF), die mit den Geräten (App1,App2,App3) einer Gerätekette (P3,APP) verbunden sind; wobei diese Gerätekette (P3,APP) insbesondere mindestens ein Gerät zum Bilderfassen (App3) und/oder mindestens ein Gerät zum Bildentzerren enthält; wobei dieses System Mittel zur Berechnung (MCIFM, MCIFE, MSIF) enthält zum Erzeugen formatierter Informationen (IF), die auf die Fehler (P5) in Verbindung mit den Merkmalen der Optik und/oder der Erfassung und/oder der Elektronik und/oder der integrierten Software mindestens eines Geräts dieser Kette zurückgehen;
wobei es dieses Gerät ermöglicht, ein Bild (I) zu erfassen bzw. zu entzerren; wobei dieses Gerät wenigstens ein festes Merkmal und/oder ein variables Merkmal (CC) je nach Bild (I) aufweist; wobei dieses feste und/oder variable Merkmal in der Lage ist, einem oder mehreren Werten des Merkmals, insbesondere der Brennweite und/oder der Fokussierung und ihren Werten der zugeordneten Merkmale (VCV), zugeordnet zu werden;
wobei dieses System Mittel zur Berechnung (MCIFM) enthält zum Erzeugen der gemessenen formatierten Informationen (IFM), die mit den Fehlern (P5) dieses Geräts aus einem gemessenen Feld (D(H)), zusammengesetzt aus der Gesamtheit der gebildeten Tripel:
- einer Bildzone (ZI) und/oder eines Kennzeichens der Bildzone (ZI);
- der Bilddarstellung (RI) der Bildzone (ZI);
- der Bezugsdarstellung (RR) einer Bezugszone (ZR), und
aus dem Wert jedes der variablen ausgewählten Merkmale für das Bild (I) zusammengesetzt sind;
wobei diese formatierten Informationen (IF) die gemessenen formatierten Informationen (IFM) enthalten können.

19. System gemäß Anspruch 18, wobei das System ferner Berechnungsmittel (MCIFE) zum Erzeugen der erweiterten formatierten Informationen (IFE), verbunden mit den Fehlern (P5) des Geräts aus den gemessenen formatierten Informationen enthält; wobei diese formatierten Informationen diese erweiterten formatierten Informationen enthalten können; wobei diese erweiterten formatierten Informationen eine Abweichung (EC) gegenüber den gemessenen formatierten Informationen aufweisen.

20. System gemäß Anspruch 19, wobei das System so ist, daß die aus den gemessenen formatierten Informationen erzeugten formatierten Informationen durch die Parameter eines durch Parameter darstellbaren Modells (SP) dargestellt werden, das aus einer Gesamtheit durch Parameter darstellbarer Modelle, insbesondere einem Satz Polynome, ausgewählt wird; wobei dieses System ferner Auswahlmittel zum Auswählen des durch Parameter darstellbaren Modells aus der Gesamtheit der durch Parameter darstellbaren Modelle enthält, durch:
- Definieren einer maximalen Abweichung,
- Ordnen der durch Parameter darstellbaren Modelle aus der Gesamtheit der durch Parameter darstellbaren Modelle nach dem Grad der Komplexität ihrer Anwendung,
- Auswählen des ersten der durch Parameter darstellbaren Modelle aus der Gesamtheit der durch Parameter darstellbaren Modelle, die so geordnet ist, daß die Abweichung (EC) geringer als die maximale Abweichung ist.

21. System gemäß einem beliebigen der Ansprüche 19 oder 20, wobei die erweiterten formatierten Informationen die gemessenen formatierten Informationen sind.

22. System gemäß einem beliebigen der Ansprüche 19 bis 21, wobei das System Berechnungsmittel umfaßt, die einen Berechnungsalgorithmus (AC) benutzen, der es ermöglicht, das gemessene Feld (D(H)) aus einer Bezugsmenge (M) zu erhalten, wobei das Bilderfassungs- oder Bildentzerrungsgerät Mittel zum Erfassen oder Entzerren der Bezugsmenge (M) zwecks Erzeugung eines Bilds (I) enthält;
wobei die Berechnungsmittel des Berechnungsalgorithmus (AC) Mittel zur Informationsbearbeitung aufweist zwecks:
- Auswählen mindestens einer Bildzone (ZI) in dem Bild (I),
- Berechnen eines Bezugsbilds (R) aus dem Bild (I),
- Bestimmen einer Bezugszone (ZR) in dem Bezugsbild (R), die homolog zur Bildzone (ZI) ist,
- Auswählen einer Unterlage (B), die es ermöglicht, die ganze oder einen Teil der Bildzone (ZI) durch eine Bilddarstellung (RI) abzubilden und die ganze oder einen Teil dieser Bezugszone (ZR) durch eine Bezugsdarstellung (RR) abzubilden,
- Auswählen von keinem, einem oder mehreren variablen Merkmalen (CC) aus der Gesamtheit der variablen Merkmale, nachstehend als ausgewählte variable Merkmale bezeichnet;
wobei sich das gemessene Feld (D(H)) aus der Gesamtheit der gebildeten Tripel zusammensetzt, bestehend aus:
- einer Bildzone (ZI) und/oder einem Kennzeichen dieser Bildzone (ZI),
- der Bilddarstellung (RI) dieser Bildzone (ZI),
- der Bezugsdarstellung (RR) dieser Bezugszone (ZR);
wobei das gemessene Feld (D(H)) sich ferner für das Bild (I) aus dem Wert jedes der ausgewählten variablen Merkmale zusammensetzt;
so daß man ein gemessenes Feld erhält, das für einen Fehler, genannt Bildschärfeverzerrung, im Sinne der vorliegenden Erfindung kennzeichnend ist.

23. System gemäß Anspruch 19, wobei das Bezugsbild (R) Bezugspixel enthält; wobei diese Bezugspixel jeweils einen Bezugspixelwert haben; wobei dieses System so ist, daß die Behandlungsmittel zum Berechnen des Bezugsbilds (R) aus diesem Bild (I) Mittel zum Entnehmen von Teilproben des Bilds (I) enthält, insbesondere damit man ein Bezugsbild (R) erhält, dessen Bezugspixel den einen oder den anderen der zwei Bezugspixelwerte annehmen können.

24. System gemäß einem beliebigen der Ansprüche 22 oder 23, wobei das System so ist, daß die Informationsbearbeitungsmittel durch Auswählen einer Unterlage (B) eine Darstellung als Frequenz ermöglichen, die insbesondere mit Hilfe einer Fourier-Transformation berechnet wird.

25. System gemäß einem beliebigen der Ansprüche 22 oder 23, wobei das System so ist, daß die Informationsbearbeitungsmittel beim Auswählen einer Unterlage (B) eine Darstellung in Kleinwellen oder in Kleinwellenpaketen zulassen.

26. System gemäß einem beliebigen der Ansprüche 22 bis 25, wobei das System so ist, daß die Informationsbearbeitungsmittel eine lineare Unterlage auswählen, die eine kleine Anzahl Elemente aufweist.

27. System gemäß einem beliebigen der Ansprüche 22 bis 26, wobei die Bezugsdarstellung (RR) aus numerischen Werten besteht; das System ferner Mittel zur Informationsbearbeitung aufweist, die es ermöglichen, das Bezugssystem (M) so auszuwählen, daß der Prozentsatz der numerischen Werte, die kleiner als eine bestimmte erste Schwelle sind, gegenüber einer vorgegebenen zweiten Schwelle kleiner ist, insbesondere 1%.

28. System gemäß einem beliebigen der Ansprüche 22 bis 27, wobei das Bezugssystem (M) aus Elementen besteht, deren Verteilung nach Größe und deren geometrische Stellung sich über ein breites Spektrum erstrecken.

29. System gemäß einem beliebigen der Ansprüche 22 bis 28, wobei das Bezugssystem (M) so gewählt wird, daß die Darstellung des Bilds (I) auf der genannten Unterlage (B) in der Nähe der genannten Fehler deutlich unabhängig von den Bedingungen der Erfassung oder der Entzerrung des Bildes (I) ist, insbesondere in dem Fall eines Bilderfassungsgeräts, dessen Wiedergabe unabhängig von der Ausrichtung und der Position des Bezugssystems (M) in Bezug auf das Bilderfassungsgerät ist.

30. System gemäß einem beliebigen der Ansprüche 22 bis 29, wobei das Bezugssystem (M) aus einem quantifizierten Bild einer natürlichen Szene gebildet wird.

31. System gemäß einem beliebigen der Ansprüche 22 bis 30, wobei es das System ferner ermöglicht, das Bild (I) durch Benutzung von Berechnungsmitteln vorzubearbeiten, um einen Teil der genannten Fehler zu beseitigen.

32. System gemäß einem beliebigen der Ansprüche 22 bis 31, wobei das System ferner Mittel zur Informationsbearbeitung umfaßt, die es ermöglichen, die erweiterten formatierten Informationen, die sich relativ zu einer beliebigen Bildzone (ZIQ) erstrecken, durch Ableiten dieser formatierten Informationen relativ zu einer beliebigen Bildzone (ZIQ) aus den gemessenen formatierten Informationen zu erhalten.

33. System gemäß einem beliebigen der Ansprüche 19 bis 32, wobei das System so ist, daß das Gerät der Gerätekette wenigstens ein variables Merkmal gemäß dem Bild aufweist, insbesondere die Brennweite und/oder die Einführungsöffnung; wobei jedes variable Merkmal geeignet ist, einem Wert zugeordnet zu werden, um eine Kombination, bestehend aus der Gesamtheit der variablen Merkmale und dieser Werte, zu bilden;
wobei das System ferner Berechnungsmittel zum Berechnen der gemessenen formatierten Informationen beinhaltet insbesondere durch Anwenden des Berechnungsalgorithmus (AC) für die ausgewählten vorgegebenen Kombinationen.

34. System gemäß Anspruch 33, wobei irgendeine Bildzone und eine der Kombinationen als Argument bezeichnet wird, wobei dieses System ferner Mittel zur Informationsbearbeitung umfaßt, um diese erweiterten formatierten Informationen, die sich auf ein beliebiges Argument beziehen, aus den gemessenen formatierten Informationen abzuleiten.

## Claims

1. A method for producing formatted information (IF) related to the appliances (App1, App2, App3) of an appliance chain (P3, APP); the said appliance chain (P3, APP) including in particular at least one image-capture appliance (App3) and/or at least one image-restitution appliance; the said method including the stage of producing formatted information (IF) related to the defects (P5) linked to the characteristics of the optical system and/or of the sensor and/or of the electronic unit and/or of the software integrated in at least one appliance of the said chain the said appliance being capable of capturing or restituting an image (I); the said appliance being provided with at least one fixed characteristic and/or one variable characteristic depending on the image (I); the said fixed characteristic and/or variable characteristic (CC) being capable of being associated with one or more values of characteristics, especially the focal length and/or the focusing and their values (VCV) of associated characteristics;
the said method including the stage of producing measured formatted information (IFM) related to the defects (P5) of the said appliance, from a measured field (D(H)) composed of a three-membered group formed by:
- an image zone (ZI) and/or an identifier of the said image zone (ZI),
- the image representation (RI) of the image zone (ZI),
- the reference representation (RR) of a reference zone (ZR), and composed of the value, for the image (I), of each of the selected variable characteristics;
the said formatted information being able to include the said measured formatted information.

2. A method according to claim 1; the said method additionally including the stage of producing extended formatted information (IFE) related to the defects (P5) of the said appliance from the said measured formatted information; the said formatted information being able to include the said extended formatted information; the said extended formatted information exhibiting a deviation (EC) compared with the said measured formatted information.

3. A method according to claim 2; the said method being such that the said formatted information produced from the said measured formatted information is represented by the parameters of a parameterizable model (SP) chosen from among a set of parameterizable models, especially a set of polynomials; the said method additionally including the stage of selecting the said parameterizable model within the said set of parameterizable models by:
- defining a maximum deviation,
- ordering the parameterizable models of the said set of parameterizable models in accordance with their degree of complexity of employment,
- choosing the first of the parameterizable models of the said ordered set of parameterizable models in such a way that the said deviation (EC) is smaller than the said maximum deviation.

4. A method according to any one of claims 2 or 3; the said extended formatted information being the said measured formatted information.

5. A method according to any one of claims 2 to 4; the said method including a calculation algorithm (AC) with which the said measured field (D(H)) can be obtained from a universal set (M); the said calculation algorithm (AC) including the following stages:
- the stage of capturing or of restituting the said universal set (M) by means of the said appliance to produce an image (I),
- the stage of choosing at least one image zone (ZI) in the said image (I),
- the stage of calculating a reference image (R) from the said image (I),
- the stage of determining, within the said reference image (R), a reference zone (ZR) homologous to the said image zone (ZI),
- the stage of choosing a base (B) with which all or part of the said image zone (ZI) can be represented by an image representation (RI) and all or part of the said reference zone (ZR) can be represented by a reference representation (RR),
- the stage of selecting zero or one or more variable characteristics (CC), referred to hereinafter as the selected variable characteristics, among the set of the said variable characteristics;
the said measured field (D(H)) being composed of the set of three-membered groups comprising:
- an image zone (ZI) and/or an identifier of the said image zone (ZI),
- the image representation (RI) of the said image zone (ZI),
- the reference representation (RR) of the said reference zone (ZR);
the said measured field D(H) being additionally composed of the value, for the said image (I), of each of the said selected variable characteristics;
in such a way that there is obtained a measured field characterizing a defect referred to as blurring within the meaning of the present invention.

6. A method according to claim 5; the said reference image (R) containing reference pixels; the said reference pixels each having a reference pixel value; the said method being such that, to calculate the said reference image (R) from the said image (I), the said image (I) is subsampled, especially to obtain a reference image (R) whose reference pixels can take one or the other of two reference pixel values;
in such a way that the reference image (R) exhibits the same defects as the image (I), with the exclusion of blurring.

7. A method according to any one of claims 5 or 6; the said method being such that the said base (B) is chosen to permit a representation in frequency, and is calculated in particular by means of a Fourier transform.

8. A method according to any one of claims 5 or 6; the said method being such that the said base (B) is chosen to permit a representation in wavelets or in wavelet packets.

9. A method according to any one of claims 5 to 8; the said method being such that there is chosen a linear base containing a small number of elements.

10. A method according to any one of claims 5 to 9; the said reference representation (RR) being composed of digital values; the said method additionally including the stage of choosing the said universal set (M) in such a way that the percentage of digital values below a first specified threshold is below a second predetermined threshold, especially 1%.

11. A method according to any one of claims 5 to 10; the said universal set (M) being composed of elements whose distribution in size and whose geometric position extend over a broad spectrum.

12. A method according to any one of claims 5 to 11; the said universal set (M) being chosen in such a way that the said representation of the said image (I) in the said base (B) is substantially independent, except for the said defects, of the conditions of capture or restitution of the said image (I); in the case of an image-capture appliance in particular, the said representation is independent of the orientation and of the position of the universal set (M) relative to the said image-capture appliance.

13. A method according to any one of claims 5 to 12; the said universal set (M) being constructed from a quantized image of a natural scene.

14. A method according to any one of claims 5 to 13; the said method additionally including the stage of preprocessing the said image (I) by means of a calculation that eliminates part of the said defects;
in such a way that the blurring within the meaning of the present invention characterizes the said appliance and the calculating means with which the said defects can be removed.

15. A method according to any one of claims 5 to 14; the said method additionally including the stage of obtaining the said extended formatted information related to an arbitrary image zone (ZIQ), by deducing the said formatted information related to an arbitrary image zone (ZIQ) from the said measured formatted information.

16. A method according to any one of claims 2 to 15; the said method being such that the said appliance of the said appliance chain is provided with at least one variable characteristic depending on the image, especially the focal length and/or the aperture; each variable characteristic being capable of being associated with a value to form a combination composed of the set of the said variable characteristics and of the said values;
the said method additionally including the following stages:
- the stage of selecting predetermined combinations,
- the stage of calculating measured formatted information, especially by employing the said calculation algorithm (AC) for each of the said predetermined combinations selected in this way.

17. A method according to claim 16; an argument being defined as an arbitrary image zone and one of the said combinations; the said method additionally including the stage of deducing, from the said measured formatted information, the said extended formatted information related to an arbitrary argument.

18. A system for producing formatted information (IF) related to the appliances (App1, App2, App3)of an appliance chain (P3, APP); the said appliance chain (P3, APP) including in particular at least one image-capture appliance (App3) and/or at least one image-restitution appliance; the said system including calculating means (MCIFM, MCIFE, MSIF) for producing formatted information (IF) related to the defects (P5) linked to the characteristics of the optical system and/or of the sensor and/or of the electronic unit and/or of the software integrated in of at least one appliance of the said chain, the said appliance being provided with at least one fixed characteristic and/or one variable characteristic (CC) depending on the image (I) ; the said fixed characteristic and/or variable characteristic being capable of being associated with one or more values of characteristics, especially the focal length and/or the focusing and their values (VCV) of associated characteristics;
the said system including calculating means (MCIFM) for producing measured formatted information (IFM) related to the defects (P5) of the said appliance, from a measured field (D(H)), composed of a three-membered group formed by:
- an image zone (ZI) and/or an identifier of the said image zone (ZI),
- the image representation (RI) of the image zone (ZI),
- the reference representation (RR) of a reference zone (ZR), and composed of the value, for the image (I), of each of the selected variable characteristics,
the said formatted information (IF) being able to include the said measured formatted information (IFM).

19. A system according to claim 18; the said system additionally including calculating means (MCIFE) for producing extended formatted information (IFE) related to the defects of the said appliance from the said measured formatted information; the said formatted information being able to include the said extended formatted information; the said extended formatted information exhibiting a deviation (EC) compared with the said measured formatted information.

20. A system according to claim 19; the said system being such that the said formatted information produced from the said measured formatted information is represented by the parameters of a parameterizable model (SP) chosen from among a set of parameterizable models, especially a set of polynomials; the said system additionally including selection means for selecting the said parameterizable model within the said set of parameterizable models by:
- defining a maximum deviation,
- ordering the parameterizable models of the said set of parameterizable models in accordance with their degree of complexity of employment,
- choosing the first of the parameterizable models of the said ordered set of parameterizable models in such a way that the said deviation (EC) is smaller than the said maximum deviation.

21. A system according to any one of claims 19 or 20; the said extended formatted information being the said measured formatted information.

22. A system according to any one of claims 19 to 21; the said system including calculating means that employ a calculation algorithm (AC) with which the said measured field (D(H)) can be obtained from a universal set (M); the said image-capture or image-restitution appliance including means for capturing or restituting the said universal set (M), so that an image (I) can be produced;
the said calculating means of the said calculation algorithm (AC) including data-processing means for:
- choosing at least one image zone (ZI) in the said image (I),
- calculating a reference image (R) from the said image (I),
- determining, within the said reference image (R), a reference zone (ZR) homologous to the said image zone (ZI),
- choosing a base (B) with which all or part of the said image zone (ZI) can be represented by an image representation (RI) and all or part of the said reference zone (ZR) can be represented by a reference representation (RR),
- selecting zero or one or more variable characteristics (CC), referred to hereinafter as the selected variable characteristics, among the set of the said variable characteristics;
the said measured field (D(H)) being composed of the set of three-membered groups comprising:
- an image zone (ZI) and/or an identifier of the said image zone (ZI),
- the image representation (RI) of the said image zone (ZI),
- the reference representation (RR) of the said reference zone (ZR);
the said measured field D(H) being additionally composed of the value, for the said image (I), of each of the said selected variable characteristics;
in such a way that there is obtained a measured field characterizing a defect referred to as blurring within the meaning of the present invention.

23. A system according to claim 22; the said reference image (R) containing reference pixels; the said reference pixels each having a reference pixel value; the said system being such that the said processing means for calculating the said reference image (R) from the said image (I) include means for subsampling the said image (I), especially for obtaining a reference image (R) whose reference pixels can take one or the other of two reference pixel values.

24. A system according to any one of claims 22 or 23; the said system being such that the said data-processing means choose therefrom a said base (B) that permits a representation in frequency, and is calculated in particular by means of a Fourier transform.

25. A system according to any one of claims 22 or 23; the said system being such that the said data-processing means choose therefrom a said base (B) that permits a representation in wavelets or in wavelet packets.

26. A system according to any one of claims 22 to 25; the said system being such that the said data-processing means choose a linear base containing a small number of elements.

27. A system according to any one of claims 22 to 26; the said reference representation (RR) being composed of digital values; the said system including data-processing means with which it is possible to choose the said universal set (M) in such a way that the percentage of digital values below a first specified threshold is below a second predetermined threshold, especially 1%.

28. A system according to any one of claims 22 to 27; the said universal set (M) being composed of elements whose distribution in size and whose geometric position extend over a broad spectrum.

29. A system according to any one of claims 22 to 28; the said universal set (M) being chosen in such a way that the said representation of the said image (I) in the said base (B) is substantially independent, except for the said defects, of the conditions of capture or restitution of the said image (I); in the case of an image-capture appliance in particular, the said representation is independent of the orientation and of the position of the universal set (M) relative to the said image-capture appliance.

30. A system according to any one of claims 22 to 29; the said universal set (M) being constructed from a quantized image of a natural scene.

31. A system according to any one of claims 22 to 30; the said system additionally making it possible to preprocess the said image (I) by employing calculating means to eliminate part of the said defects.

32. A system according to any one of claims 22 to 31; the said system additionally including data-processing means with which it is possible to obtain the said extended formatted information related to an arbitrary image zone (ZIQ), by deducing the said formatted information related to an arbitrary image zone (ZIQ) from the said measured formatted information.

33. A system according to any one of claims 19 to 32; the said system being such that the said appliance of the said appliance chain is provided with at least one variable characteristic depending on the image, especially the focal length and/or the aperture; each variable characteristic being capable of being associated with a value to form a combination composed of the set of the said variable characteristics and of the said values;
the said system additionally including calculating means for calculating the measured formatted information, especially by employing the said calculation algorithm (AC) for selected predetermined combinations.

34. A system according to claim 33; an argument being defined as an arbitrary image zone and one of the said combinations; the said system additionally including data-processing means for deducing, from the said measured formatted information, the said extended formatted information related to an arbitrary argument.
